Europäisches Patentamt

European Patent Office

Office européen des brevets

(19)

(11) **EP 0 580 800 B1**

(12) **EUROPEAN PATENT SPECIFICATION**

(45) Date of publication and mention
of the grant of the patent:
**23.07.1997 Bulletin 1997/30**

(21) Application number: **92917287.2**

(22) Date of filing: **17.04.1992**

(51) Int Cl.⁶: **G06F 3/033**

(86) International application number:
**PCT/US92/03194**

(87) International publication number:
**WO 92/18927 (29.10.1992 Gazette 1992/27)**

(54) **CURSOR TRACKING**

CURSORSERVOSTEUERUNGSSYSTEM

SYSTEME D'ASSERVISSEMENT DE CURSEUR

(84) Designated Contracting States:
**DE ES FR GB IT**

(30) Priority: **19.04.1991 US 688921**

(43) Date of publication of application:
**02.02.1994 Bulletin 1994/05**

(73) Proprietor: **HOME ROW, INC.**
**Clackamas, Oregon 97015 (US)**

(72) Inventors:
- **FRANZ, Patrick, J.**
  **Portland, OR 97215 (US)**
- **BIEHL, Philip, D.**
  **Tigard, OR 97223 (US)**
- **STRAAYER, David, H.**
  **Colton, OR 97017 (US)**
- **DODIER, Robert, H.**
  **Portland, OR 97214 (US)**

(74) Representative: **Ayers, Martyn Lewis Stanley et al**
**J.A. KEMP & CO.**
**14 South Square**
**Gray's Inn**
**London WC1R 5LX (GB)**

(56) References cited:
**WO-A-91/05304**          **DE-A- 3 523 270**
**DE-C- 3 913 648**

- **PROCEEDINGS OF THE XXTH ANNUAL ALLERTON CONERENCE ON COMMUNICATION, CONTROL, AND COMPUTING 6 October 1982, MONTICELLO, ILLINOIS, US pages 343 - 344; C.E. LINDAHL: 'A digital compensation technique for pressure transducers'**

## Description

### Field of the Invention

This application relates to cursor control on a display screen such as a computer display screen, and more particularly, discloses methods and apparatus for processing pointing data acquired from a pointing device so as to control cursor motion in a natural and ergonomically efficient manner.

### Background of the Invention

In the prior art, discrete pointing devices such as a mouse or trackball are used to input cursor displacement information. Such input devices sense displacement, for example changes in orthogonal directions (X,Y), which in turn is used to reposition a cursor on the display screen. Discrete pointing devices are ergonomically deficient in that their use requires a user to move his or her hand away from the usual typing position to begin a pointing operation. Additionally, prior art devices fail to provide good cursor speed control.

US-A-4 680 577 describes a multipurpose cursor control keyswitch which may be used in a keyboard as both a keyswitch (or typing device) to acquire typing (alphanumeric) data and as a pointing device to acquire pointing (direction) data. That patent discloses sensors coupled to the keycap to detect lateral forces applied to the keycap by a user. US-A-5 231 386 discloses multipurpose keyswitches, i.e. keyswitches that include integrated force sensors for acquiring pointing data responsive to both lateral and vertical forces applied to a keycap, so that a user can enter both typing and pointing data at the same keycap.

Similar keyswitches are disclosed in WO-A-91 05304. Furthermore, DE-C-3 913 648 discloses a lateral force sensitive key using force sensing resistors.

US-A-5 189 403 discloses a typing and pointing system, as indicated by the title, which automatically switches between a typing mode of operation and a pointing mode of operation, responsive to the user's actions, and without requiring an explicit user command to initiate the mode change.

Acquisition of typing and pointing data from the keyboard in an integrated or multi-function keyboard system, in a manner transparent to application software, is disclosed in US-A-5 252 971.

One problem in pointing systems in general is overshoot, i.e. moving a cursor beyond the destination intended by the user. Many pointing systems seem too fast when the user wants slow, careful pointing and, conversely, seem too slow when the user wants to move the cursor quickly, for example over several inches.

### Summary of the Invention

The present application discloses methods, and apparatus for practicing the methods, of acquiring and processing pointing data to control a cursor. This is referred to as "cursor tracking". Cursor tracking is not limited in application, however, to integrated keyboard systems. Cursor tracking as described herein is useful in any cursor control application, i.e. an application that requires pointing activities, and need not involve processing alphanumeric or typing data at all.

For example, a game control system may include a video display screen and a pointing device such as a mouse or joystick for acquiring pointing data to control a cursor on the display. Cursor tracking is essential to such an application, while typing may be completely absent.

A general object of the invention is to improve the "feel" or ergonomic efficiency of cursor tracking, in part by presenting a model of cursor tracking that is understandable to non-technical users, and allows users to adjust the "feel" or response of a cursor tracking system as necessary.

Another object of the present invention is to control apparent cursor speed responsive to the magnitude of forces applied to a pointing device by a user.

Another object of the invention is to automatically correct for nonlinearities inherent in force sensing apparatus, such as force sensing resistors, to improve cursor tracking.

A further object of the invention is to automatically correct for manufacturing tolerances and for aging in force sensing pointing devices to improve accuracy and repeatability of cursor tracking.

Yet another object of the invention is run-time ability to modify cursor tracking characteristics.

The invention is set forth in claim 1.

The foregoing and other objects, features and advantages of the invention will become more readily apparent from the following detailed description of a preferred embodiment which proceeds with reference to the drawings.

### BRIEF DESCRIPTION OF THE DRAWINGS

FIG. 1 is a block diagram of an integrated keyboard for input of pointing and typing data.

FIG. 2 is a cross-sectional view of a keyswitch-integrated pointing device for use in an integrated keyboard of the type illustrated in FIG. 1.

FIG. 3 is a schematic diagram of an array of force sensing resistors (FSRs) coupled to a keyboard microprocessor for implementing a charged-capacitor type of A/D conversion in an integrated keyboard.

FIG. 4 is a schematic diagram of an array of FSRs coupled to a keyboard microprocessor system that includes an A/D converter for use in an integrated keyboard.

FIG. 5 is a flowchart of a main control loop of prior art alphanumeric keyboard software.

FIG. 6 is a flowchart of main control loop software of an integrated keyboard according to the present invention.

FIG. 7 is a flowchart of a communications interrupt handler for use in connection with the main control loop of FIG. 6.

FIG. 8 is a flowchart of a timer interrupt handler for use in connection with the main control loop of FIG. 6.

FIG. 9 is a conceptual diagram illustrating the hierarchical relationship of the main control loop of FIG. 6, the interrupt handlers of FIGS. 7 and 8, and pertinent memory locations.

FIG. 10 is a perspective view of a force sensor array of the type employed in the pointing device of FIG. 2.

FIG. 11 is a block diagram of a cursor tracking pipeline according to the present invention.

FIG.12A is a curve illustrating FSR resistance as a function of force applied to a typical force-sensitive resistor (FSR) used for force sensing in a pointing device.

FIG. 12B is a curve illustrating A/D output ("counts") as a function of FSR resistance.

FIG. 12C is a curve illustrating raw force value as a function of A/D counts.

FIG. 12D is a linearization curve illustrating linear force value as a function of raw force value.

FIG. 12E is a curve illustrating linearized force value as a function of raw force value.

FIG. 13A illustrates force vectors in a four-sensor pointing system, each force vector comprising a bias component and a user component.

FIG. 13B shows the force vectors of FIG. 13A after compensation to remove the bias components.

FIG. 14 illustrates force vectors in an alternative four-sensor pointing system.

FIG. 15 illustrates force vectors in a three-sensor pointing system.

FIGS. 16A and 16B illustrate combining X and Y force vectors to determine a net XY force vector.

FIG. 17 is a flowchart illustrating a method of approximating a magnitude of a net XY force vector.

FIG. 18 shows illustrative linear, quadratic and composite curves of cursor displacement as a function of applied force magnitude.

## DETAILED DESCRIPTION OF A PREFERRED EMBODIMENT

An integrated keyboard for use in a multi-functional keyboard system includes an array of directional force sensors positioned under a selected one of the keys so as to form a pointing assembly. Preferably, the selected key is one of the usual typing keys on the home row (ASDF-JKL;) of the keyboard. Alternatively, a special key located alongside the usual array of typing keyswitches may be provided with force sensors exclusively for pointing, but such an arrangement is believed less efficient in use than the preferred arrangement.

The force sensors detect lateral (X and Y axes) and vertical (Z axis) forces applied to the keycap by a user. The addition of these force sensors do not affect the normal operation or feel of the keyswitch. Simple, low cost A/D conversion hardware is provided to convert the signals from the force sensors to digital form for the keyboard microprocessor. Additional software in or available to the keyboard microprocessor is provided to read the A/D hardware and send the resulting sensor data to the host computer. Driver software on the host computer then examines the keyboard data stream and uses the key press/release information and the sensor data to emulate a mouse.

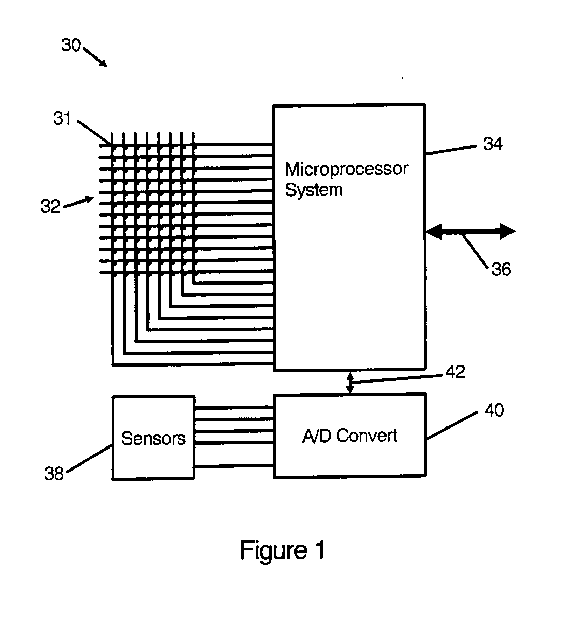

FIG. 1 is a block diagram of the keyboard hardware 30. It shows an array of keyswitches 32 coupled to a microprocessor system 34. 31 schematically indicates an example keyswitch. The microprocessor system, in turn, is coupled over a communication link 36 to a host processor (computer) as is conventional. Additionally, an array of force sensors 38 is connected to analog-to-digital (A/D) conversion means 40. The A/D converter, in turn, is connected over a bus 42 to the microprocessor. The force sensors, A/D converter and related hardware, and methods of acquiring pointing data using a keyboard of the type described are discussed in greater detail below.

## Pointing Force Sensors

The J key preferably is used as the pointing key, as it is actuated by the right hand index finger in the usual typing position. The J key guide is isolated from other guides, and forces on the keycap are coupled through the force sensors to a reference structure. This reference structure is usually a base plate or PCB. The J key plunger still actuates the J key switch in the normal way.

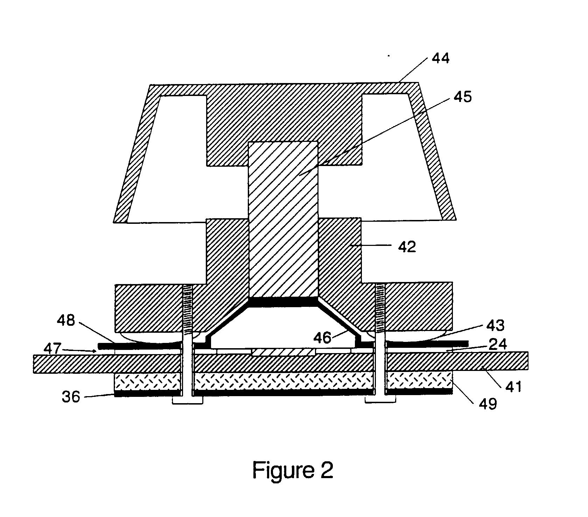

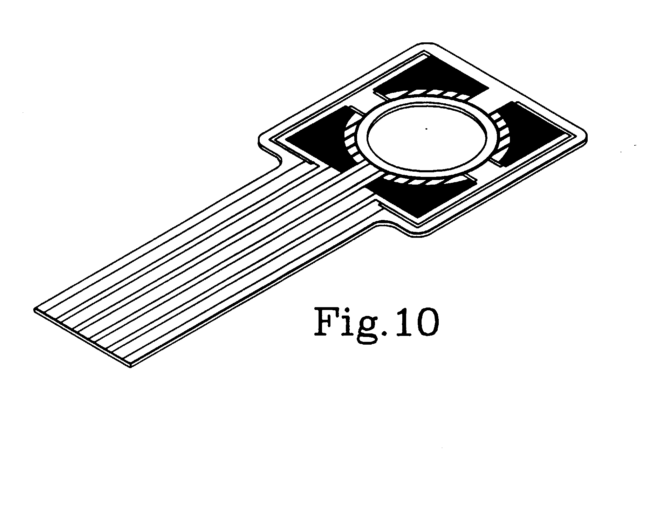

FIG. 2 illustrates in cross-section an example of a suitable keyswitch fitted with force sensors. A rigid actuator 42 includes a central aperture that serves as a plunger guide, and includes specially contoured actuator surfaces or "pads" 43 on its underside for transmitting forces applied to the keycap to force sensors. A keycap 44 includes a depending plunger 45 for actuating a rubber dome type switch assembly 46. A force sensor array 47 includes a force sensor located below each actuator surface to sense forces applied to the keycap by a user. A perspective view of a force sensor array is shown in FIG. 10. A force distribution pad 48 is disposed between the actuator surfaces and the force sensors. A compressible pre-load pad 49 biases the sensors to a predetermined operating point. Additional details of a keyswitch integrated pointing assembly are disclosed in the copending application referenced above.

The force sensors may employ any of a variety of force sensing technologies. Examples include piezo and foil strain gauges, optical, magnetic and capacitive technologies. Force Sensing Resistors ("FSRS"), a new thick film contact technology, are preferred as they are easy to use, inexpensive, and provide a large output signal. FSRs comprise two plastic films, one with a conductive silver ink and one with a resistive carbon ink. The harder the films are pressed together, the lower the resistance. Resistances range from 500K Ohms to 5K Ohms. Since the FSRs are not repeatable under low forces (<1,5 N), the useful range of resistances is limited to 20K to 5K (approximately 1,5 to 4,5 N). FSRs are commercially available from Interlink Electronics, Inc. of California.

The FSR lays flat on the reference structure and the actuator pads press on four separate areas. This gives four orthogonal resistance signals proportional to the forces on the keycap. In some applications, the four areas are at 45 degree angles to the keyboard, so the signals have to be combined to get XY data.

The actuator is preloaded onto the force distribution pad, thereby biasing the FSR to a point on its force/resistance curve beyond the low force range where the FSR is unstable. In operation, forces applied by a user's finger cause some of the FSRs to be loaded beyond the preload point, and others to be unloaded below the preload point. The preload point is arranged so a approximately 1 N force on the keycap causes a maximum FSR unloading that takes it just to the FSR stability point.

Depending on the particular FSR, the shape of it's force/resistance curve may mean the region of instability, the preload point, and the operating range may be different. For some FSR configurations, the preload point is approximately 12K and the operating range is from 5K to 20K. For others, the curve is shifted upwards, so the preload point might be 30K, with an operating range of 100K to 10K. This is not a problem; the A/D component values just need to be adjusted accordingly for a particular FSR configuration.

### The A/D Hardware

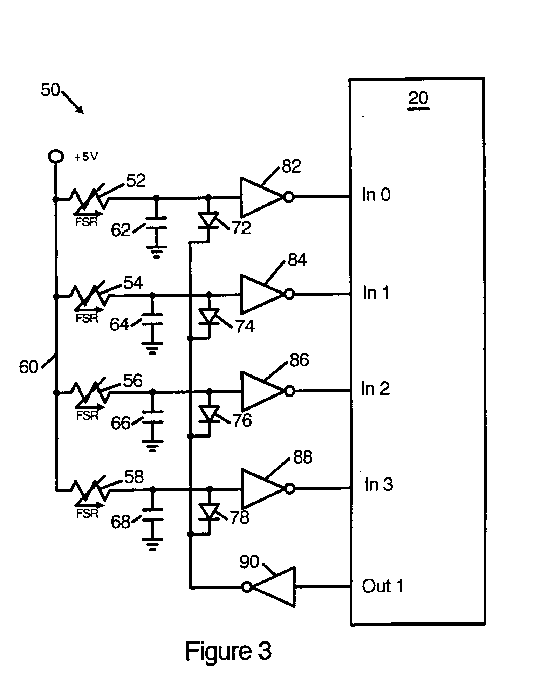

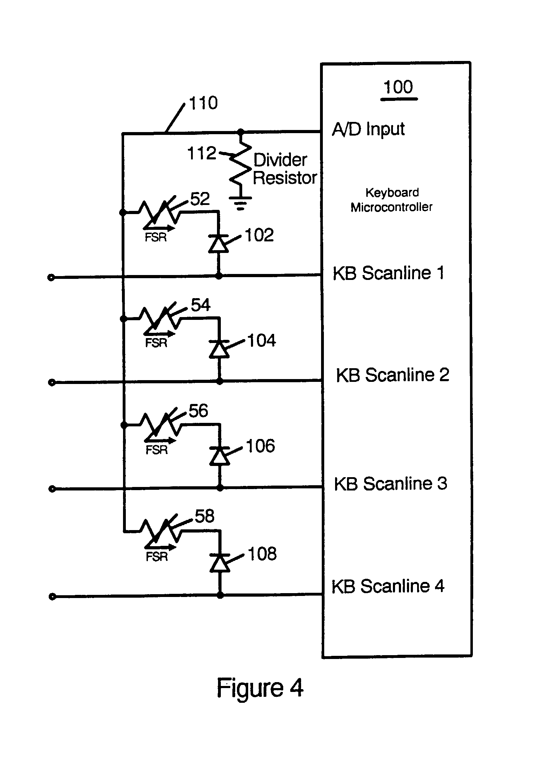

The A/D hardware requirements of the integrated keyboard system are easily met by many different schemes. One operative example of A/D conversion hardware is shown in Figure 3, described below. A simpler alternative A/D circuit is shown in Figure 4, for systems with a standard A/D converter in the keyboard microprocessor.

The general specifications for the "A/D" conversion required are:

1. Typical FSR resistance range to be converted: 5K to 20K. Actual range is a function of the particular FSR configuration.

2. 7 or 8 bit resolution.

3. 15 conversions/second on each of 4 channels. Three channels are sufficient in an appropriate configuration. A four-channel system may be designed to sense failure of one FSR and continue to operate using the remaining three FSRs.

4. Conversion linearity is not required, especially if 8 bit resolution is provided. FSRs are monotonic but strongly nonlinear, and extensive corrections may be done in host software. Additional correction due to the A/D conversion may be provided.

5. To reduce the size and cost of the FSR and keyboard substrate, it is best to have one side of each of the FSR sensors be connected in common (5 leads for 4 integrated sensors; 4 leads for 3 integrated sensors).

6. Part-to-part consistency needs to be within 10%.

7. Power consumption in operation must be low. Power consumption at idle must be extremely low for use in battery powered applications such as lap top or "notebook" computers.

### Charged Capacitor A/D

FIG. 3 is a schematic diagram of an FSR sampling circuit 50, coupled to a keyboard processor 20 for A/D conver-

EP 0 580 800 B1

sion. The basic concept of the sampling circuitry of FIG. 3 is that, for each FSR, a capacitor is charged through the resistance of the FSR. The amount of time required to charge the FSR to a threshold voltage is then measured by the keyboard processor. The charge time is proportional to the FSR resistance.

Referring to FIG. 3, each FSR 52, 54, 56, and 58 has one side coupled to a common node 60. Common node 60 is coupled to a predetermined bias voltage, for example +5 VDC. The other side of each FSR is coupled to a capacitor 62, 64, 66, and 68, respectively. Each capacitor is also coupled to the anode of a corresponding blocking diode 72, 74, 76, and 78, respectively, and to the input of a buffer which may be, for example, an inverter gate 82, 84, 86, 88. The output of each inverter/buffer is coupled to a corresponding data input InO, In1, In2, In3 of the processor 20. The cathodes of the blocking diodes are connected in common to another inverter 90, which is driven by a processor output terminal "Out 1".

In operation, all of the capacitors are discharged before each timing cycle to establish a known reference voltage on the capacitor. As shown, inverter 90 is used to discharge the capacitors via the blocking diodes.

Thus, there is an FSR, a capacitor, a diode, and a thresholding inverter for each channel. The inverter used to discharge the capacitors is shared by all four channels. Depending on the microprocessor used, the thresholding inverters may not be required. To reduce overall A/D time, it is important that the device used to discharge the capacitors have a low internal resistance. A simple transistor is sufficient.

In an operative example, the capacitors are 0.047µF, the FSR range is 5K to 20K ohms, and the maximum charge up time is 1msec. The timing is done in the keyboard microprocessor software with a 2 instruction loop.

In the embodiment illustrated, there are four sensor channels, one for each of up, down, left, and right. If physical considerations prevent this configuration, host software takes care of creating an XY signal from whatever the sensor configuration may be. In an alternative arrangement, for instance, the FSR sensors are arranged in the four corners of the keyswitch cell, yielding northeast (NE), northwest (NW), southwest (SW), and southeast (SE) signals. We have also found that fewer than four sensors, for example three sensors arranged in a triangle, are adequate for acquiring pointing data. In that case, of course, only three sampling channels are required.

This circuitry is designed for low parts cost and minimal disruption in a standard keyboard application with an existing keyboard microprocessor. It provides adequate resolution at an adequate conversion rate. Five bits of a parallel I/O port on the keyboard microprocessor are required. An alternative arrangement using a timer on the microcontroller would use as little as two parallel port pins and one timer input. Note that using 5 port pins leaves 3 port pins remaining in a standard 8 bit port, sufficient to run a 3 to 8 line decoder, thus effectively allowing for replacement of the 5 pins used.

This circuitry is not ideal for low power operation unless the capacitors are very small because the charges on the capacitors are dumped before each cycle. If the capacitors are small, the time constant will be small and a high speed counter is needed to get adequate resolution. Note, though, that this circuitry only needs to be powered while the system is in pointing mode. The distinction between pointing and typing is explicit, so the sampling circuitry easily could be arranged to power up only when needed.

## Microcontroller with Built In A/D

Many different sampling and A/D conversion schemes, including the capacitor charging method described above, may be employed. Other techniques may be apparent to those skilled in the art in light of this disclosure. It is preferred, however, that a microcontroller with built-in A/D be used. Commercially available devices include MC68HC11 (Motorola), S80C552, S80C752 (Signetics), and others. Using a built-in A/D converter reduces the conversion time, reduces power consumption, and reduces parts count. A sampling schematic for use with a microcontroller with built in A/D is shown in Fig. 4, described next.

Referring now to FIG. 4, the sampling circuit first converts the FSR resistance to a voltage by means of a voltage divider, formed as follows. Each FSR 52, 54, 56, 58 has one side connected to a common node 110. A divider resistor 112 is connected between common node 110 and ground. Common node 110 is connected to an A/D input of keyboard microprocessor 100.

This fixed leg of the divider should be selected to be near the preloaded FSR resistance. If the preloaded FSR resistances (with no applied loads from a user's finger) are about 30K, for instance, the divider resistor 112 should be about 30K. Since the FSR resistance change is so great and a common divider resistor is used, the tolerance of the divider resistor is not critical. If the microprocessor 100 has a ratiometric A/D (the MC68HC11, for instance), it is best, but not necessary, that the high and low voltage limits correspond to the maximum and minimum voltages from the divider. The FSR operating range is limited, so the voltage swing out of the divider will not be all the way to Vcc nor all the way to ground.

As shown, each FSR is enabled in turn by existing keyboard scan lines, designated KB Scanline 1 through KB Scanline 4. The particular arrangement shown assumes that the scan lines are normally low and pulse high long enough for the sample and hold in the A/D. It also assumes only one scan line will be high at a time. This is only required when reading the FSRs, not during normal scanning. For applications in which the keyboard uses normally high scanlines that pulse low, one could reverse the diodes and connect the divider resistor to Vcc instead of to ground.

It is of course also possible to use four A/D inputs and four divider resistors. This would eliminate the blocking diodes, any loading the FSRs may place on keyboard scan lines, and any loss of A/D range due to voltage drops.

The minimum series resistance of the FSR/divider resistor is generally high enough that loading is not a problem. An important consideration is the combination of voltage drops across the driver transistors in the keyboard microprocessor 100 and the voltage drops across the blocking diodes. These voltage drops can reduce A/D range by up to 1.4 volts.

## Keyboard Microcontroller Software

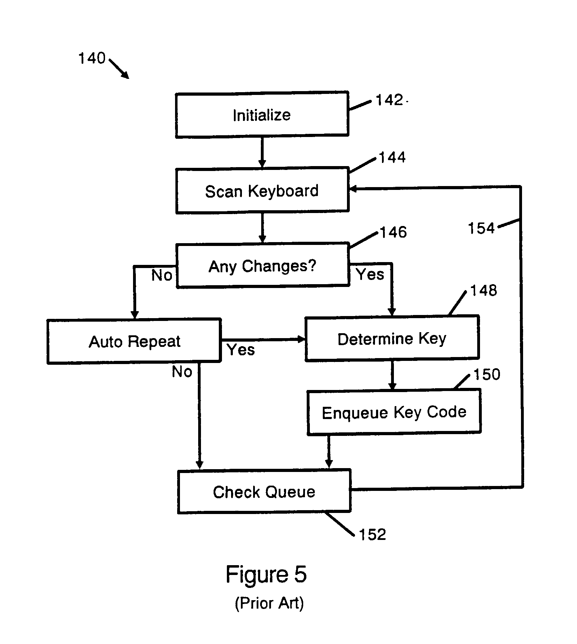

Known keyboard controller software is represented by the flowchart 140 shown in FIG. 5. This software handles acquisition and communication to the host of typing data only. Referring to flowchart 140, after initialization 142, the keyboard microcontroller scans the keyboard 144 and tests for changes in keyswitch states 146. If a change is detected, the key is determined 148, and enqueued 150. The microcontroller then checks the Queue 152 and transmits data, if necessary, to the host. Then the basic scan loop 154 is repeated.

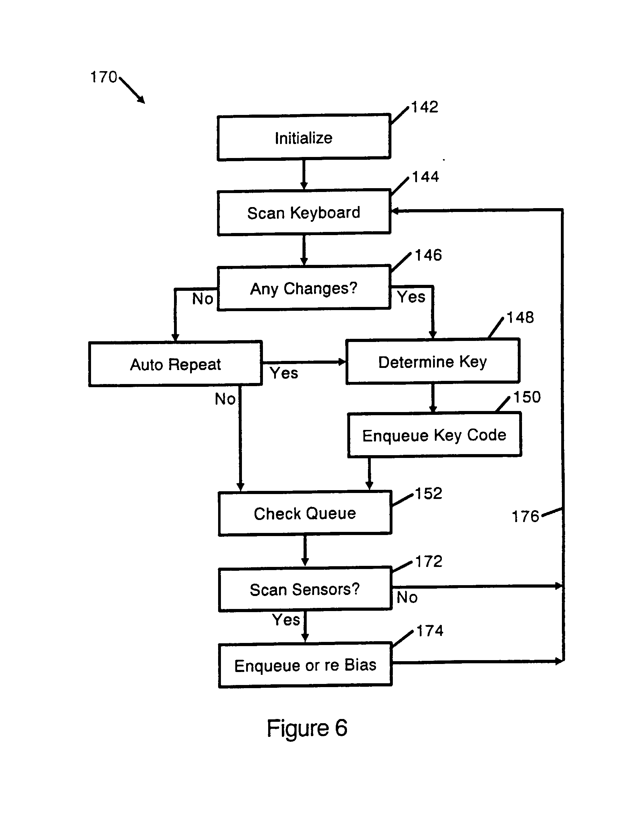

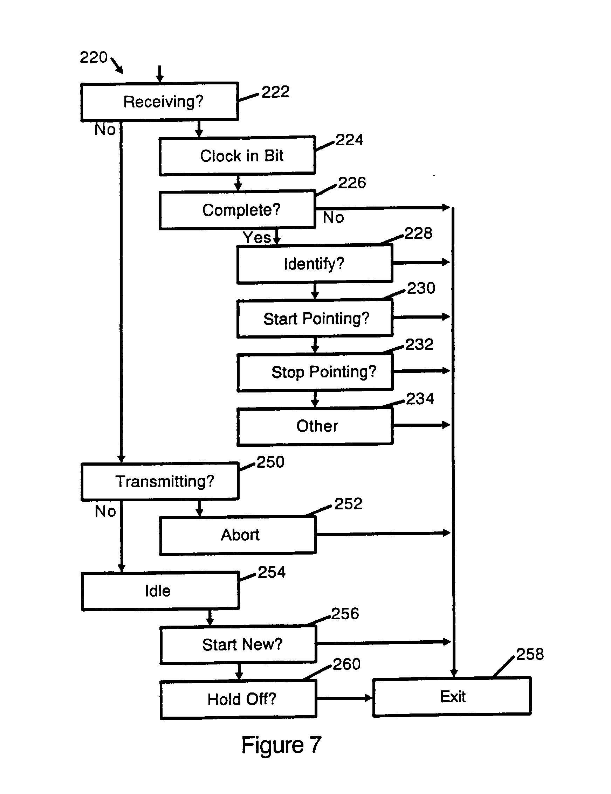

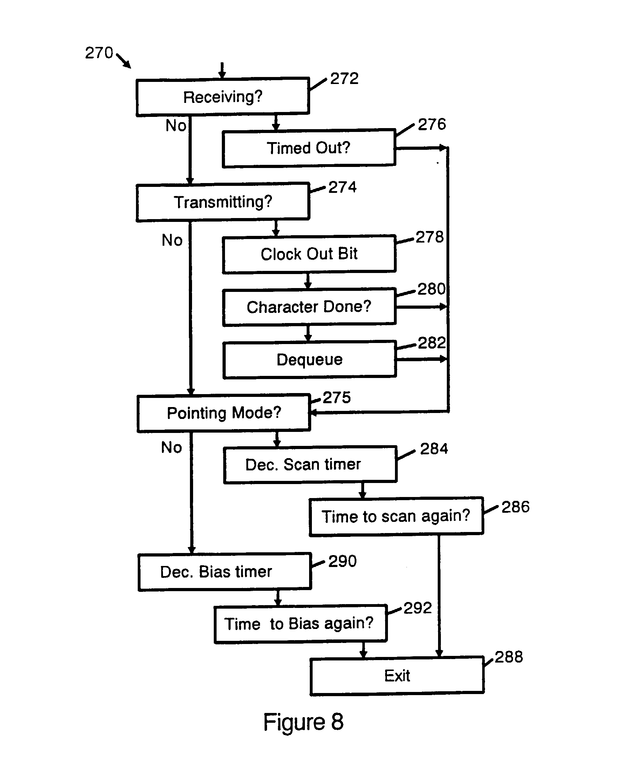

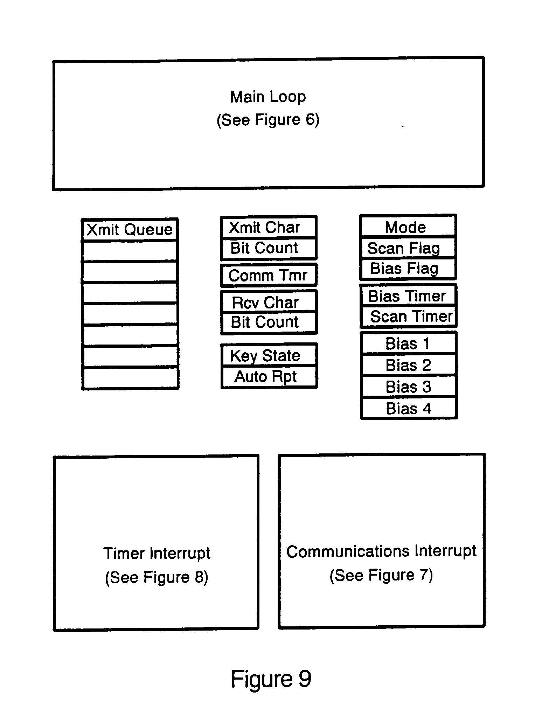

FIG. 6 shows a flowchart 170 of integrated keyboard operations according to the present invention. The upper portion of flowchart 170 is similar to the flowchart 140 of FIG. 5, the same reference numbers being used to identify common elements. The new flowchart 170, however, includes two additional steps following the check queue step 152, namely "Scan Sensors?" 172 and "Enqueue or re-Bias" 174.

Following check queue 152, the processor checks a scan timer flag (set by an interrupt routine) to see if it is time to read the A/D converter to determined force sensor values. If not, control returns, via loop 176, to resume the usual keyboard scanning for keystrokes.

On the other hand, if it is time to do so, the system reads the A/D to acquire force sensor data. Next, in step 174, the system checks a "rebias" flag to determine whether to transmit the force sensor data to the host computer in a data packet, or to use this data to update running bias values for each sensor. If rebiasing, the data is not enqueued. Running bias values are used to cancel drift in the sensors, as further described below.

## New Keyboard Commands

The present invention requires that the keyboard microprocessor or microcontroller be arranged to respond to the following new commands from the host processor:

### 1. IDENTIFY

This command is used at host driver initialization time for the host to determine the keyboard hardware. The preferred command code is DC hex. The keyboard response is described in detail below.

### 2. START POINTING

A "start sending pointing sensor data" or more simply, start pointing command. The preferred command code is DA hex. The keyboard responds with an ACK, sends a bias values data packet, a standard data packet, and proceeds to send standard data packets periodically, preferably at 60 millisecond intervals. These data packets are described in detail below.

### 3. STOP POINTING

A "stop sending pointing sensor data" or more simply, stop pointing command. The preferred command code is DB hex. The keyboard responds with an ACK and stops sending pointing data packets.

At all times the keyboard controller continues it's normal activities of scanning the key matrix and sending keycodes. (See FIG. 6.) The software on the host CPU is responsible for all mode change parsing and all key remappings. The keyboard microcontroller is only responsible for handling the three new commands above.

Referring to FIG. 7, a flowchart 220 is shown to illustrate a communication interrupt handler. The communication interrupt handler preferably is implemented as part of the keyboard software, for communicating with the host processor. A communication interrupt occurs whenever a bit is ready on the communications port from the host computer.

In response to a communication interrupt, the keyboard processor first tests its internal status to determine if it is already receiving (222). If not, the processor tests (250) to determine if it is already transmitting. If the keyboard processor currently is neither receiving nor transmitting, the communication link is idle (254), and the processor next tests (256) to determine whether it is ready to start receiving a new command. If it is ready to start receiving a new command, the processor sets up to do so, and exits the communication interrupt handler (258).

In some keyboard-to-host communications methods, a "hold off" interrupt may occur when the host wishes to prevent the keyboard from starting to send anything. Test 260 tests for this standby status.

Referring back to the top of flowchart 220, if the keyboard system is already receiving when it detects the communication interrupt, it proceeds to clock in the pending bit 224, and then test whether or not the communication is complete 226. If not, control returns from the interrupt handler. This loop (222, 224, 226, 258) will be repeated in response to subsequent communication interrupts to receive subsequent bits until the complete communication, such as a keyboard command, has been received.

When the communication is complete, the keyboard processor examines the received command to identify it. If the received command is the IDENTIFY command, the processor queues up a reply string, and then exits the interrupt handler. If the received command is the START POINTING command 230, the processor sets a pointing flag, starts a scan timer and a bias timer, queues up a bias packet, and then exits. If the command is the STOP POINTING command, the processor clears the pointing flag and the scan timer, sets the bias flag, and then exits. If not, test for other commands 234 which are known in the prior art, and handle them accordingly.

Referring to decision 250, if the keyboard system was transmitting when the communication interrupt occurred, abort transmission 252 to receive the pending bit from the host.

These new features, preferably implemented in firmware, are designed to be as simple, modeless, and transportable as possible. A minimum amount of code space in the keyboard microcontroller is required, and the code does not have to change when the user interface is modified.

## The IDENTIFY Command

The IDENTIFY command identifies the keyboard as being a multi-function keyboard, i.e. one having integrated typing and pointing mode capabilities. This allows the host software to make sure that it can work with the software in the keyboard.

The keyboard response to the IDENTIFY command preferably comprises a seven byte sequence. The first byte is a standard ACK (FA), and the second byte is DC hex to identify the response as being from the DC command. The third and fourth bytes are keyboard software version numbers. The fifth byte indicates the sensor type and configuration, while the sixth and seventh bytes identify the key that is physically to the left of the 'A' key on the keyboard (the normal break sequence for the key to the left of A is sent).

The software version is returned in two bytes. Both are encoded values. The first byte is the major software version plus 85 hex. The second number is the minor software version plus 85 hex. A software version of 1.02, for example, would map to encoded software version bytes of 86 87. 85 hex is added to ensure the host keyboard port does not remap the values. Version number codes may range, for example, from 85H to E9H, a range of 100 decimal.

The sensor configuration tells the host software what to expect from the sensors, how many there are, etc. It, too, is encoded by adding 85 hex. For example, an 85 (hex) may be used to indicate four FSR sensors under the J key, one in each of the four corners of the key cell. An 86 may indicate four FSR sensors under a dedicated key that emits 6F/EF when pressed and released. Again, the sensors are in the corners of the key cell. Other codes may be used to identify other sensor configurations, for example three FSR sensors instead of four, as well as to identify other arrangements, such as four sensors orthogonally arranged in line with the keyswitch array matrix.

The key to the left of A is identified so that it can be used for explicit mode change operations by the user. Details of both explicit and implicit (automatic) mode change are described in the commonly-owned applications referenced above, respectively. On PC/AT$^{tm}$ keyboards, this key is usually the CONTROL or the CAPS LOCK key. The upcode sequence (F0 nn) is sent so the host does not mistake the code for a keypress (a mistaken key release is less hazardous).

A typical response to an IDENTIFY command is as follows:

Keyboard Sends: FA DC 86 85 85 F0 58
Host Sees: FA DC 86 85 85 BA

The data is interpreted as follows: "Yes, this is an integrated keyboard" (FA DC); "the keyboard software version is 1.0" (86 85); "the sensor configuration is type 0" (85); and "the key to the left of a is caps lock" (F0 58 maps to BA, or CAPS LOCK up in a standard (BM$^{tm}$ PC/AT$^{tm}$ or compatible system).

## Timing Data Acquisition and Communication

FIG. 8 is a flowchart 270 of a timer interrupt handler for implementing the present invention. A timer interrupt occurs at a regular predetermined interval, usually triggered by an internal countdown timer feature in the keyboard microprocessor. In the prior art, a timer interrupt handler checks internal status (whether or not the system is currently sending or receiving) and typically performs actions related to communications. These functions are illustrated in the top part of flow chart 270, blocks 272, 274, 276, 278, 280 and 282.

If the system is not currently receiving 272, it tests for transmitting 274. If not transmitting, it tests for pointing mode 275 by checking the pointing flag (see 230 in FIG. 7). If pointing mode, a "packet-to-packet" or pointing count down timer is decremented 284. This is used to pace transmission of sensor data packets, as follows.

Next, the pointing count down timer value is examined 286 to determine if it is time to scan the sensors again, indicated by the pointing count down timer reaching a predetermined value. If so, the system sets the SCAN FLAG and clears the BIAS FLAG. If it is not yet time to scan again, exit 288.

Alternatively, if the system is not pointing (275=NO), a re-bias count down timer is decremented 290 in response to the timer interrupt. Next, the re-bias count down timer is examined 292 to determine if it is time to scan the sensors to update bias values, indicated by the re-bias timer reaching a predetermined value. If so, the system sets the SCAN FLAG and sets the BIAS FLAG. If not, exit 288.

The keyboard system thereby scans for new pointing data at a first predetermined frequency during pointing mode, and scans for new sensor bias data at a second predetermined frequency during a non-pointing (typing) mode. The SCAN FLAG indicates that data needs to be acquired by the main loop shown in flowchart 170. The BIAS FLAG indicates that the data should be used to update the bias values if set and that the data should be sent to the host if cleared. The count down timers are reset when they reach their terminal values.

### Reading the A/D for Sensor Values

The reading of the sensor values is highly dependent on the sensor type used, the microprocessor type, and the A/D hardware (on-chip, or one of several discrete methods). For a typical Intel 8048 class microcontroller and a four-element FSR sensor, the A/D typically is a simple "how long does it take to charge a capacitor" type (see FIG. 3). The scanning is done in a two instruction loop, so the time for each channel is about 10 + (2 * 214) or 438 instructions per channel (as described later, the data values range from 0 to 213, so there are 214 possible values for each sensor). Considerably less time is required if a timer input or a built in A/D converter is used (see FIG. 4).

### Determining the Sensor Bias Values

If FSR sensors are used, it is important to have an idea of the values from the A/D when the pointing key is not being used. This is because the FSR sensors are preloaded approximately to the middle of their operating range (and the middle of the A/D range), for example by a spring assembly, and any forces applied by the user tends to load some of the FSRs and unload other of the FSRs. As a user applies forces to the keycap, some sensor readings go up, and others go down. Typical non use, idle readings are generally around 100 to 120 out of a possible 214.

The preload is variable over an appreciable range (plus or minus 1/4th, or 25% maximum), and to correct for manufacturing tolerances and long term drift, the host software deducts the no-load sensor readings from the in-use (pointing) sensor readings to get a net force indication. The keyboard is responsible for gathering the no-load (bias) readings.

At initialization time, and periodically (every 5 minutes to 15 minutes) thereafter, the keyboard needs to read the individual sensor values and individually average them. Each sensor reading should be ignored if it is more than 12.5% (1/8th) or so different from it's running average. If possible, a reading should be ignored if the pointing key is operated within some short period of time (1 second or so) before or after the reading. This should not be necessary if the running average contains sufficient terms (if the effect of a new reading is weighted so as to not allow it to change the average by more than a certain amount, 1/8th or so).

The sensor bias (no-load) values are accumulated and sent at the start of every pointing session. Bias value data packets may have the same format as pointing (or current) data packets with the exception of an identifying field in the second byte. The host detects the presence of a bias value data packet and updates the host software's internal bias values.

At power-up, the keyboard controller reads the initial null point values and establishes the basis bias values. When the keyboard is told to enter pointing mode and begin scanning, it first sends a data packet which contains the current null point or bias values. This allows the host software to correct for drift due to aging and for variability between keyboards. The flags byte on a null point values packet begins with hex A instead of 9.

### Sending Sensor Data Packets

When the keyboard receives the command to begin sending sensor data packets (DA), it does the following:

1. Responds with an ACK (FA), as with any other command (set typematic, set/reset mode indicators, etc.).

2. Send a bias values packet. This is done by enqueuing a bias values packet for automatic transmission.

3. Read the A/D and send a current sensor values packet. This is effected by setting the scan flag and clearing the bias flag. Later sensor values packets are then effected by setting the pointing mode flag and resetting the scan timer.

4. At the same time, continue scanning the key matrix, processing keys, and sending keycodes.

5. Periodically, for example every 60 milliseconds, plus or minus 10 milliseconds (15 times a second) read the A/D again and send a current sensor values packet. The repeatability of the time between readings is important-variations will affect the cursor speed.

A sensor data packet is 6 bytes long for sensors with 4 elements. The first byte is an identifier byte of DA, which lets the host know that the next 5 bytes are sensor data, not keycodes (once the DA is sent, nothing should be sent for the next 5 bytes but sensor data). The host will attempt to interpret the next 5 bytes as sensor data, however, if it sees an erroneous value (a value less than 85 hex or greater than EF hex) it will go back to treating the codes from the keyboard as keycodes, starting with the erroneous data code.

There are two types of sensor data packets: bias value packets and current value (pointing) packets. They differ only in the high nibble of the flags byte (hex A for bias values and hex 9 for data values).

The 6-byte packets are arranged as follows:

**First Byte**: The identifier byte. The value is DA hex. This identifies the start of a reply packet. This is a reserved keycode for the IBM[tm] PC/AT[tm].

**Second Byte**: The flags byte. The upper 4 bits identifies the packet as being a current values or bias values packet, and the lower 4 bits are data value encoding flags, one for each sensor.

If the upper nibble is 9 hex, the packet is a current data values packet. If the upper nibble is A hex, the packet is a bias values packet.

The lower 4 bits are flags that indicate which half of the encoding the following data values are from. For 4 element FSR sensors using the 4 corners of the key cell, the NE flag is bit 3, NW bit 2, SW bit 1, and SE bit 0. This corresponds to the order in which the following data bytes are sent.

**Last four bytes**: For the last four bytes, the data is encoded as indicated in the following 'C' pseudo code:

```
if(value < 0x6B){

        encoded = value + 0x85; /* make start at 85H */

        clear corresponding bit in flags byte

}
else if(value < 0xD6){

        encoded = value + 0x1A; /* make start at 85H */

        set corresponding bit in flags byte

}
else{

        encoded = 0xEF; /* limit to max data value */

        set corresponding bit in flags byte

}
```

Raw sensor values from 0 to 6A hex (0 to 106 decimal) are mapped to encoded data values of 85 hex to EF hex, with the corresponding bit in the flags byte cleared. Raw sensor values from 6B to D5 hex (107 to 213 decimal) are mapped to encoded data values of 85 to EF hex as well, but the corresponding bit in the flags byte is set instead of cleared.

Note that this encoding maps the sensor values to innocuous codes that are not remapped by the host AT keyboard port (8042) hardware. The codes used range from 0x85 to 0xEF. Values outside this range are typically used or remapped by the 8042. This encoding allows passing raw data values from 0x00 to 0xD5 (0 to 213) for a total of 214 possible data values.

**Third Byte**: encoded value of NE sensor
**Fourth Byte**: encoded value of NW sensor
**Fifth Byte**: encoded value of SW sensor
**Sixth Byte**: encoded value of SE sensor

The keyboard A/D hardware maps low FSR resistances (high forces) to high values and high FSR resistances (low forces) to low values. The foregoing encoding requires the 8042 keyboard controller to pass these upcodes unmodified.

An illustrative set of interactions with the keyboard is the following:

| From Host: | From Keyboard: |
|---|---|
| DC | FA DC 86 85 85 F0 58 |
| DA | FA |
| | DA A0 C5 C0 C8 C6 |
| | DA 91 89 C0 D8 C5 |
| | DA 90 C5 C0 C7 C6 |
| | . |
| | . |
| | . |
| DB | FA |

## Sampling Rate

We have found 15 samples per second to be a useful sampling rate. This encoding thus requires 90 characters per second. The "human loop" delay in this system, i.e. delay for a user to observe an action on the screen (cursor motion or position) and move his or her finger (press the pointing key) to effect a response to the observation is on the order of 400 milliseconds. The sampling rate should be at least sufficient to not add to the human loop delay. A minimum sampling rate for good performance therefore is about four samples per second.

Faster sampling improves visual feedback to the user of cursor motion. The cursor motion has a smoother appearance to the user at a sampling rate of, for example, 20 samples per second. That translates to a sensor data rate of 20 times 6 or 120 bytes per second. For some applications, this rate may be limited by the communication link bandwidth. Such a limitation may be overcome by using one or more of the following techniques.

1. "Double up" data packets using a single byte command.

2. Encode only the difference in the sensor data value since the last packet. In other words, send only a delta value, rather than a absolute value. This can be done in a smaller packet, thereby reducing the data rate proportionately.

3. Use of a special code, one byte long, to indicate a repeat of a preceding byte. A "repeat byte" also is useful to reduce the amount of data required and therefore reduce the necessary bandwidth.

FIG. 9 is a conceptual diagram, showing the methods illustrated in the preceding figures surrounding the various shared data items, shown in the middle. These data items are defined in the following Table:

## Table 1. Key to Abbreviations Used in FIG. 9

| Abbreviation | Definition |
| --- | --- |
| **Key State** | Keyboard key scan state |
| **Auto Rpt** | Auto Repeat State |
| **Xmit Queue** | Transmit Queue |
| **Xmit Char** | Transmit Character |
| **Rcv Char** | Receive Character |
| **Comm Tmr** | Communications Timer |
| **Mode** | keyboard mode flag, i.e. *typing* or *pointing* |
| **Scan Flag** | The flag to indicate to the main loop (FIG. 6) that a sensor scan should be done. |
| **Bias Flag** | The flag to indicate whether the scanned sensor data should be transmitted or used to auto bias. |
| **Bias Timer** | The timer for the control of bias data scanning. Invented art. |
| **Scan Timer** | Timer for packet to packet sensor data timing. Invented art. |
| **Bias n** | Storage for the current bias values, one for each sensor. |

### Null Point Sensor Bias Values

The keyboard controller keeps a "null point" or bias value for each FSR to allow for drift correction. Periodically during typing mode, the keyboard controller will read the FSRs and update the null point values. For each sensor, the new null point value will be averaged into the running null point value unless the new null point value is different by more than 12.5% (1/8th). If the difference is more than 12.5%, the new null point value will be assumed to be in error.

The keyboard controller will also ignore new null point values that are taken within a few seconds of the pointing (J key being pressed.

## Host Driver Software Overview

The Host Driver Software reads the keyboard port, parsing mode changes between typing and pointing. While in pointing mode, the driver provides a mouse interface.

While in typing mode, the driver has merely to examine the keyboard data stream for the sequences that indicate a change to pointing mode. If the keyboard data is anything else (typing data), it is processed in the normal way.

If the keyboard data indicates a change to pointing mode, the driver tells the keyboard to begin sending A/D data, as described above, and proceeds to interpret the keyboard data accordingly. The pointing data is processed as detailed below.

Key press and release information is used in pointing mode to emulate mouse buttons (preferably the F, D, and S keys, though any keys could be used) and to provide useful new pointing device features. New features include real time cursor speed range changing and useful keys such as INSERT and DELETE remapped to keys that are reachable from the home row. Selected other keycodes may be processed as in typing mode. Most other keycodes are thrown away.

While in pointing mode, the driver parses for mode changes back to typing mode. When one is found, the keyboard is told to stop sending sensor data (by sending a DB hex command).

Mode changes may be requested, for example, by the following key sequences (where "LOA" means key to the left of 'A'): {LOA down, J down, LOA up} = enter temporary pointing mode; {J up} then means leave pointing mode. {ALT down, J down, ALT up} = enter locked in pointing mode;{ALT down, J down} = leave locked in pointing mode. Alternatively, special methods may be used to determine if presses of the pointing key are attempts to type or attempts to point (automatic mode change). Note that the keyboard does not have to parse these transitions.

While pointing, the F key is the primary mouse button; D is the secondary mouse button; and S is the third mouse button. Various other keys are remapped under user control: G is DEL; E is INS; Q is ESC; V is slow down cursor movement; and SHIFT-V is speed up cursor movement. The ENTER, SHIFT, CONTROL, ALT, and CAPS LOCK keys are processed normally. All other keys are ignored. Preferably, the Host Driver software is user configurable as to key placements and mode changes.

## Keyswitch Chording

An integrated system according to the invention may use one or more unusual key chordings not commonly encountered in normal typing. It is important, therefore, that no ghosting or lockout occur during these chordings.

To illustrate, the J key is depressed during all pointing operations. The F and D keys are used as mouse buttons, so J, F,and D may all be pressed at the same time. J may also be pressed in conjunction with Tab, Q, W, E, R, T, A, S, G, Z, X, C, V, and B, as well as the normal chording keys, the space bar, and the Enter key. Virtually any other keys may be employed in chords for other purposes.

## Host Keyboard Port 8042 Requirements

All the added multi-functional keyboard related communications use keyboard port data values in the range of 85 to EF hex. Normally, these are upcodes. The keyboard, however, is not sending the "up" prefix (F0 hex) prior to these values; it just sends the values. The host computer's 8042 keyboard port must not remap values in this range.

It is a requirement that if the keyboard sends an 85, the keyboard port gives the host an 85. If the keyboard sends an EF, the keyboard port must give the host an EF, and so on, for all values between 85 and EF hex.

### Introduction to Processing Pointing Data

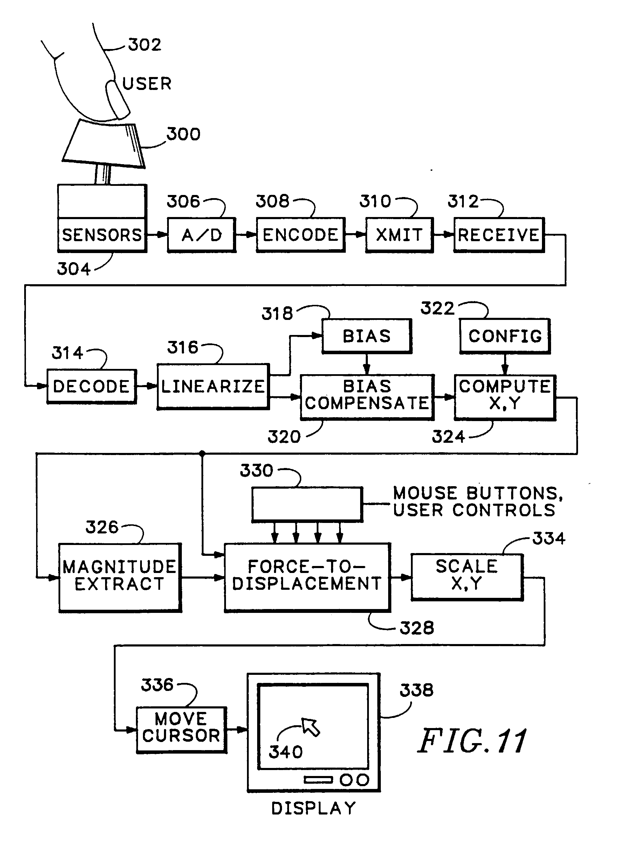

FIG. 11 is an overall block diagram of a cursor tracking system according to the present invention. The diagram shows a keycap 300 operable by a user's finger 302. The keycap may be coupled to a keyswitch-integrated pointing device, such as that illustrated in FIG.2. Alternatively, the keycap may be coupled to a dedicated pointing device, i.e. one having force sensors but no switch. The keycap is shown coupled to an array of force sensors 304, as described above with reference to FIG. 2, for detecting lateral as well as vertical forces applied by the user's finger.

Sensors 304 in turn are coupled to A/D apparatus, for example as described above with reference to FIGS. 3 and 4, to convert the applied forces to force sensor data. Specifically, the sensors convert force to resistances, and the A/D apparatus converts the resistances to data in the form of A/D output "counts", as further described below. These "raw" force sensor values are encoded 308, transmitted from the keyboard to the host processor 310, received in the host 312, and decoded 314 to recover the force sensor values, as described above.

Each of the raw force sensor values is linearized 316 to form a corresponding linear force value. Next, in the case of a preloaded system, each of the linear force values is compensated 320, responsive to a corresponding force sensor bias value 318, to form a corresponding unbiased, linear force value. The next step is computing an X vector and a Y vector (process 324) by combining the unbiased, linear force values according to their associated directions. The direction associated with each force value is determined by the configuration of the force sensors. The configuration information is acquired by the host from the keyboard, for example during initialization, and stored 322.

The resulting X and Y vectors are combined to form a net XY vector. The magnitude of the net XY vector is computed, process 326. This magnitude is used in force-to-displacement computations, process 328, which also takes into account mouse button status, predetermined speed factor and speed limit values, and other user controls 330. The force-to-displacement computations in turn yield a scaling factor. The X and Y vectors are scaled by the scaling factor, process 334, to form final X and Y cursor displacement values, respectively. These values are used to move the cursor 336, which results in repositioning the cursor symbol 340 on the display screen 338. The resulting change in cursor position will be in the direction of the force applied to the keycap by the user, and over a distance proportional to that user-applied force.

**Linearization**

The first step in mapping sensor data is to "linearize" 316 the raw force values to form linear force values. Linearization is necessary to correct for anomalies or nonlinearities inherent in the force sensors, the keyswitch-integrated pointing assembly mechanics, and the A/D conversion. The goal is to form a set of force vectors (or a net force vector) that is approximately linearly related to the forces applied to the sensors.

The raw force values represent forces arising from two sources. First are pointing forces, i.e. forces applied to the keycap 300 by the user. A second contributor to the force values are bias forces. Bias forces arise essentially from preloading the sensors, as discussed above. During pointing operations (or pointing mode), the force sensor values represent both user-applied and bias forces. During typing mode (or another non-pointing mode), when the user is not pressing the pointing keycap, the force sensor values represent only bias forces. The same linearization process is applied in both cases, as all force sensor data is acquired in the same way and therefore is subject to the same anomalies. Linearization design requires consideration of the characteristics of the data acquisition system.

FIG. 12A is a curve illustrating resistance as a function of mechanical force applied to a typical force-sensitive resistor (FSR) used for force sensing in a pointing device. This generally Y=1/X shaped curve falls off rapidly at first, and then stabilizes, as the FSR exhibits a minimum resistance R, despite increased force. Also significant is that resistance is very high until some minimum or threshhold force $F_1$ is applied. Thus the 1/X curve is shifted upward due to the minimum resistance, and to the right due to the minimum force. The minimum force is typically about 50 grams per FSR, and the minimum resistance is typically about 3K-ohms. The exact shape of this curve will vary depending upon the particular FSR employed and the mechanical characteristics of the system. The resulting resistance is measured by the A/D circuits described above (see FIGS. 3 and 4).

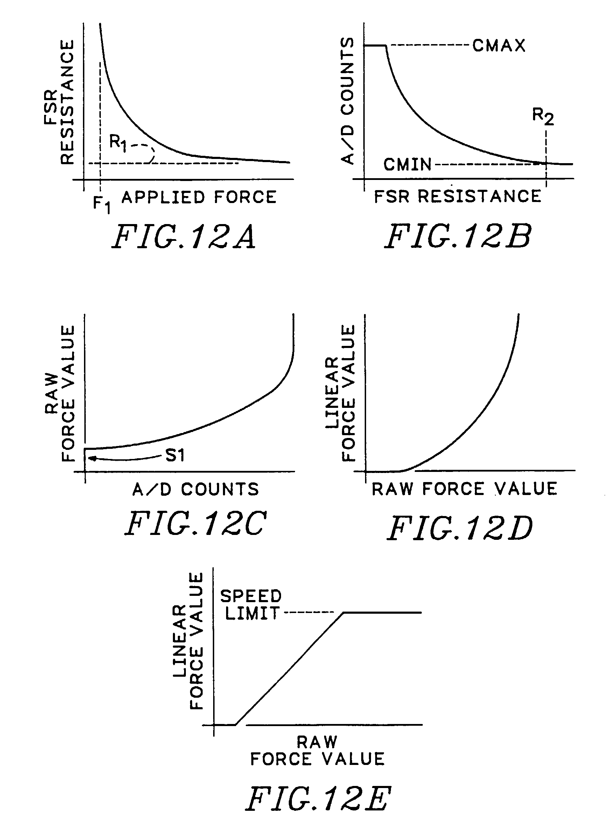

Referring now to FIG. 12B, this curve illustrates an FSR resistance to A/D counts mapping provided by the data acquisition system. This is a generalized curve for the A/D response of both a voltage divider A/D (FIG.4) and a charged capacitor A/D (FIG.3)

The A/D software is arranged to assign high A/D counts to low resistances (high forces) and to assign low A/D counts to high resistances (low forces). Thus, the curve of FIG. 12B also is a generally (1/X) shape.

The A/D output or count is limited by the software to a predetermined maximum value or A/D count limit, indicated as CMAX. This value is selected to be in a range of about 100% to 200%, preferably about 150%, of the typical operating force range, so it generally is not reached in normal use. In the preferred embodiment, CMAX corresponds to about 4K-ohms FSR resistance. Additionally, the A/D count is forced to a predetermined minimum value CMIN for all resistance value equal to or greater than a predetermined maximum, indicated as $R_2$. This resistance value is typically around 50K-ohms. A useful operating range of forces thus is mapped to an A/D count range of CMIN to CMAX. The actual numbers will depend upon the particular implementation. In one operative example, the A/D count range is 0 to 213. See "Sending Sensor Data Packets" above.

FIG. 12C shows force as a function of A/D counts for an individual sensor. This curve is a result of combining the force to FSR resistance curve (FIG. 12A) and the FSR resistance to A/D counts curve (FIG. 12B). We find that this function is similar to a section of a parabolic curve, offset upwards from the origin and limited to the operating range of A/D counts defined above as CMIN to CMAX. The initial vertical segment S1, in which force increases but the A/D count stays at zero, reflects a range of undetectable forces, typically about 0 to 50 grams, corresponding to $F_1$ in FIG. 12A. Once the FSRs start operating (force>$F_1$), the curve of FIG. 12C exhibits a generally quadratic relationship between A/D count and force, i.e. the A/D count squared is proportional to force.

This roughly quadratic relationship holds true until the A/D count limit (CMAX in FIG. 12B) is encountered. This ensures that user-applied forces are distinguishable over the useful operating range, but forces beyond that are not. In practice, this arrangement is useful for discouraging users from applying excessive forces because they receive no further response. We have found that providing for excessive cursor speed merely facilitates overshoot and therefore reduces pointing efficiency.

For most systems, the force sensors are preloaded to a standby operating point in a range of approximately 40% to 70%, preferably about 60%, of the A/D count range (CMIN to CMAX). Higher preloading tends to unduly age the sensors. When a user applies forces to the keycap, the normal range of operating forces is such that the full range of A/D counts is never reached. Typical operating forces are in a range of 0,3 to 0,6 N down force and 0,03 to 0,5 N side force, resulting in A/D counts from 20 to 190. At rest (standby operating point), preloading results in standby A/D counts of 100 to 140, preferably about 130 (i.e. 60% of full range).

We have found the curve of FIG.12C to be approximately a quadratic parabolic shape for most combinations of FSR, keyboard mechanics and A/D hardware. Other curves may be fitted more accurately, but a simple, easy to calculate quadratic proves to be quite adequate. The variabilities in FSRs, mechanics and A/D circuitry all tend to cluster around a quadratically fitable curve.

In view of the above force response characteristics, i.e. a roughly quadratic function within the allowed operating range of A/D counts, linearization of the raw force values may be effected by use of a quadratic linearization function, generally of the form $ax^2+b$, stated as follows:

$$LFV = (RAW^2 \times LINSQ) + LINOFF$$

where LFV represents the "linearized" or linear force value. RAW represents the raw force value, i.e. the A/D count to be linearized. LINSQ represents a linearization square factor, and LINOFF represents a linearization offset factor. Typically LINOFF is set to 0, as offsets are cancelled during bias compensation, described below. An example of a linearization function of this type is illustrated by the curve of FIG. 12D.

Selection of a value of LINSQ is arbitrary and depends upon the selected range of linearized values. Absolute force values are not important, so arbitrary units may be selected as convenient for calculation purposes. Preferably, the coefficient is selected to result in operation in a range of values that provides sufficient resolution yet is convenient to manipulate in, for example, a 16-bit or 32-bit computer such as a personal computer.

In an operative example of a pointing system according to the invention, A/D values fall in a range of 0 to 213. After squaring, this results in values from 0 to 45,369. This range of numbers requires 16 bits for binary representation. We have found it convenient to use an LINSQ coefficient of 407 with an implicit binary point of 18, i.e. the coefficient actually is $407/2^{18}$. Ten-bit representation provides sufficient accuracy and eases subsequent calculations.

The linearization calculation described is applied to each raw A/D value to form a corresponding *linear force value* (LFV). This value is not necessarily strictly linear, but the phrase is used to indicate that a linearization calculation has been done. Referring again to FIG. 11, the linear force values, in the case of bias values, are stored 318 for use in subsequent bias compensation calculations. Pointing mode linear force values are provided to process 320, bias compensation, described below.

FIG. 12E shows linear force value as a function of raw force value. This is the result of the linearization illustrated by the curve of FIG. 12D. This function is approximately linear, offset by the null region corresponding to the minimum force $F_1$ in FIG. 12A, and clamped at a value corresponding to the maximum A/D count.

**Bias Compensation**

The next step in mapping sensor data is adjusting or compensating each linear force value to remove the effect of preloading on the corresponding force sensor. As described above, the force sensors are preloaded to establish a desirable standby operating point. The preload or bias force must be removed from each linear force value to recover the force applied by the user.

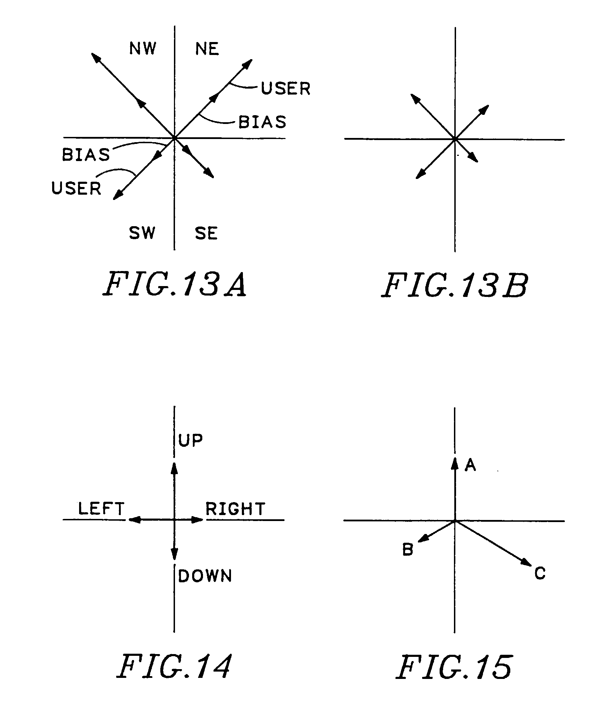

FIG. 13A illustrates a set of four orthogonal force vectors. Each force vector has a magnitude represented by the corresponding linear force value, calculated as described above. Each force vector has a associated direction determined by the orientation of the corresponding physical force sensor relative to a predetermined origin.

In a keyboard application, it is convenient to define a cartesian "keyboard coordinate system" in which the positive Y or UP direction is toward the top row of keys as seen by the user. Similarly, positive X or RIGHT direction is toward the user's right, etc. In this illustration, the four force vectors are 45 degrees offset from the axes. These vectors correspond to a set of four orthogonal force sensors arranged in a keyboard 45 degrees offset from the keyboard coordinate system. Each vector thus may be identified by the corresponding compass point (NW,NE,SW,SE). The particular coordinate system used is arbitrary, as it will be communicated to the host and taken into account in cursor tracking, as explained below.

Each force vector in FIG. 13A comprises two segments, a BIAS segment and a USER segment. In each case, the BIAS segment begins at the origin and represents the preloading or bias force applied to the corresponding force sensor. The USER segment extends from the tip of the BIAS segment, colinear to it, and represents the user-applied force or, more precisely, a component of the user-applied pointing force along the direction of the corresponding sensor.

FIG. 13B illustrates the four vectors of FIG. 13A after the BIAS vectors have been subtracted, leaving only the USER vectors. Since the BIAS and USER vectors are necessarily colinear, in practice the subtraction may be done by simple scalar arithmetic, i.e. by subtracting a corresponding bias value from each linear force value. (The raw bias values for each sensor, it may be recalled, are measured by the keyboard software and provided to the host processor, for example, at the outset of each pointing operation.) The results of the bias compensation step are the net forces being applied by the user to each sensor.

It should be noted that the results of the bias deduction step can be negative. In other words, the net, linearized force value for a particular sensor may be negative. For example, when the user pushes up, the net output on the down sensor is likely to be negative (also indicating "up"). This provides as much as twice the signal of a strictly positive force system. This is easy to accomodate, as the 10-bit results discussed above would require only 11 bits if doubled, plus a sign bit for negative results, for a total of 12 bits, well within the 16-bit word size of most small computers.

### Non-preloaded Sensors

In systems having non-preloaded sensors, low user applied forces may not be detectable. This results in poorer fine cursor positioning control. This can be partially offset by doubling the effect of the opposing sensor (in a four-sensor pointing device) when a particular sensor reads zero. If the "down sensor" in such a 90-degree configuration reads zero, and the "up sensor" has a valid reading, doubling the effect of the "up sensor" partially compensates for the part of the data (the "down sensor" reading) that is lost. This will also tend to smooth the sudden dropping out of one of the sensors. Drop out occurs when the user is smoothly shifting the forces on the keycap, but the A/D count suddenly limits to zero, because force is too low. If this discontinuity is reflected in the cursor movement, the user will be surprised.

### Force Vector Combination to Derive Net X and Y Vectors

The next step in mapping sensor data to cursor control is to combine the net (or unbiased) linear force values to derive a net X vector and a net Y vector.

See step 324 in FIG. 11. Again, since the directions associated with the sensors relative to an X and Y coordinate system are predetermined, calculating the corresponding force values requires only scalar arithmetic.

Referring now to FIG. 13A, in the case of sensors at 45-degrees, the X and Y vectors are calculated as follows:

$$X=(NE+SE)-(NW+SW) \quad Y=(NE+NW)-(SW+SE)$$

Thus, "east" sensor force values are added together, and the combined "west" sensor total is subtracted, to yield a net "east-west" force value for X. The Y components cancel out. Likewise, when computing Y, the net "south" value is subtracted from the net "north" value, giving a net Y force value, and the X components cancel each other out.

In the case of sensors aligned with the XY coordinates, as illustrated in FIG. 14, the calculation is similar but simpler: A net X is computed by subtracting LEFT from RIGHT, and a net Y is computer by subtracting DOWN from UP, where RIGHT, UP and DOWN are the unbiased linear force values acquired from a set of four orthogonal force sensors arranged along the XY axes.

In the case of a three-sensor pointing system, the sensors preferably are equi-angularly arranged about the origin, with one of the sensors aligned with one of the X or Y axes, as illustrated in FIG.15. As shown, the A element is on the Y-up axis. For the direction with one element on that axis (here Y), the net force value is the corresponding sensor force value (A) minus (B+C)cos 60. The cosine of 60 is 0.5 which is conveniently calculated by a divide by 2 (shift down once). The other two vectors, B and C in FIG. 15, are 60-degrees off axis, so the X component value is (C sine 60 - B sine 60). Therefore X=0.866 (C-B).

The sine of 60 (0.866) is a more difficult coefficient with which to compute. A good approximation is to multiply by 887 and divide by 1024 (which equals 0.8662). Again, the result is a net X vector and a net Y vector. A net vertical force (Z component) can be determined by summing all of the sensor force values, since the user is pushing down on all of the FSR elements.

**Net XY Vector Magnitude Computation**

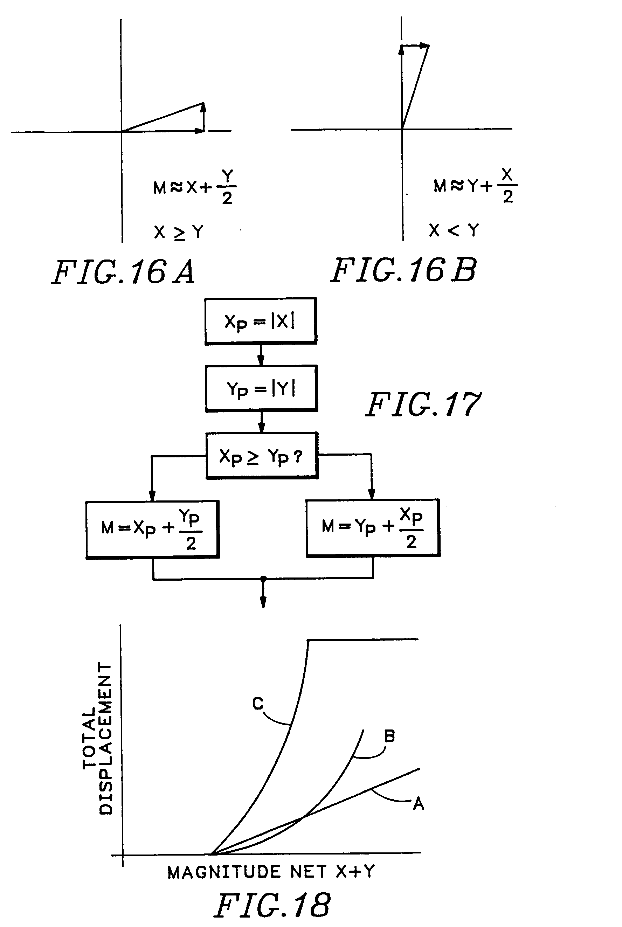

The next step in mapping sensor data to cursor control is to combine the X and Y vectors to determine the magnitude of a net XY vector. See step 326 in FIG. 11. FIG.16 illustrates the vector addition process. It is known that the magnitude of a vector equals the square root of the sum of the squares of the magnitudes of its component (here X,Y) vectors. Square root computations may be cumbersome in some applications, however. Fortunately, the magnitude computation need not be very precise, as it is not as critical as direction is to ergonomic "feel" of the pointing system.

A useful approximation of the magnitude of a net X+Y vector may be caculated by summing the magnitude of the larger vector with one-half the magnitude of the smaller vector. FIG. 16A shows an X (horizontal) vector larger than a Y (vertical) vector. The magnitude of the net X+Y vector is approximated by X+Y/2. Similarly, as illustrated in FIG.16B, the magnitude of X+Y is approximated by Y+X/2 where X<Y.

This approximation method is illustrated by the flowchart of FIG. 17. It shows (1) determining the magnitude of each of the component vectors; (2) comparing the magnitudes of the two vectors to determine which one is larger; and (3) calculating an approximation of the magnitude of the sum X+Y vector as described above. This approximation is very easy to calculate and exhibits a maximum error of about 11% at the 26 and 64 degree points. It is also helpful to use IXI and IYI in the calculation so that the magnitude is always positive.

**Force-to-Displacement Functions**

The force-to-displacement functions remap the net XY vector to a new cursor displacement. First, the magnitude of the net XY vector is used to compute an intermediate value we will call *speed,* according to a formula:

$$speed = SQUARE \times (M - NULL)^2 + LINEAR \times (M - NULL)$$

where SQUARE is a predetermined square term coefficient, M is the magnitude of the net XY vector, NULL is a predetermined minimum force to initiate cursor motion, and LINEAR is a predetermined linear term coefficient. While this intermediate value does not literally represent cursor speed, it is proportional to the apparent cursor speed that results from the user-applied force, as will become apparent.

This polynomial "speed" evaluation has the following advantages. First, the null value provides a "dead zone" at low forces to hold the cursor at one location. This prevents small variabilities in the pointing system from making the cursor difficult to stop at low user-applied forces (for example forces present due to the user's finger resting on the pointing keycap). Second, the linear term provides for smooth, predictable and controllable small force motion. This term dominates at small forces. And third, the squared term provides for faster movements at high forces but does not have much effect at small force levels. This squared term dominates at high forces.

The squared, linear and null term factors or coefficients may be predetermined and stored in memory. No single set of numbers is ideal for all pointing operations, however. It is very important to ergonomically efficient pointing operations to have not one but at least two sets of these coefficients. For example, a first set of coefficients may be used for dragging operations, i.e. pointing operations during which a mouse button is pressed. A second, different set of coefficients may be used for repositioning operations, i.e.pointing operations during which a mouse button is not pressed.

Thus, according to the present invention, the force-to-displacement function further includes the steps of: providing a first value for use as the SQUARE term coefficient during repositioning operations and a second value for use as the SQUARE term coefficient during dragging operations; checking status of the mouse buttons to determine whether the user is repositioning or dragging; if repositioning, selecting the first value for use as the SQUARE term coefficient for computing the speed value; and, if dragging, selecting the second value for use as the SQUARE term coefficient for computing the speed value, thereby adjusting the cursor tracking responsive to the mouse button status. Note that this substitution of appropriate coefficients in the tracking response is done automatically, i.e. without explicit user intervention. The coefficients are adjusted in response to the user's current pointing activity.

The linear term coefficient may be selected in the same manner as the squared term coefficient. Thus the method includes the steps of: providing a first value for use as the LINEAR term coefficient during repositioning operations and a second value for use as the LINEAR term coefficient during dragging operations; checking status of the mouse buttons; and selecting one of the first and second values responsive to the mouse button status for use as the LINEAR term coefficient in computing the speed value. The null term also may be selected on the basis of the mouse-button status.

**Speed Factor and Speed Limit**

The next step in the force-to-displacement mappping method is scaling the calculated speed value according to a predetermined *speed factor* to form a *cursor speed* value. The *speed factor* enables the user to keep the same "responsiveness" or "feel" of the system but vary the overall apparent cursor speed. The speed factor is alterable as one of the user controls described below.

Next, the computed *cursor speedvalue* is compared to a predetermined *cursor speed limit value.* The *cursor speed limit* sets a maximum apparent cursor speed. (It is actually a maximum cursor displacement per cursor update. Since the cursor position is updated periodically, i.e. at a fixed frequency, cursor displacement per update translates to apparent cursor speed.) If the cursor speed exceeds the cursor speed limit, the cursor speed is reduced to the cursor speed limit value. The speed limit prevents the user from moving the cursor faster than the user can control it. This feature is especially useful on LCD screens, where the cursor update rate is low because of the LCD response time.

After speed factor scaling and speed limiting, the resulting cursor speed value is total cursor displacement. In other words, the resulting value is the magnitude of the cursor repositioning called for in response to the user's actions. The cursor position (or repositioning) is controlled by X and Y values, however, rather than a single vector. It remains therefore to scale the X and Y vectors so that the resulting total magnitude of a new net XY vector equals the total cursor displacement value.

The necessary scaling factor is the ratio of the total cursor displacement value to the magnitude of the net XY vector calculated earlier (process 326 in FIG. 11). This ratio, called a *scaling factor,* is the final result of the force-to-displacement functions 328. The X and Y vectors are scaled according to the scaling factor, and the resulting X and Y displacement values are used to move the cursor, process 336. Details of the actual cursor driver are known. The result is motion of the cursor image 340 on a the display 338. To summarize, the net cursor displacements are calculated as follows:

$$\text{(speed x speed factor)} = \text{total cursor displacement \{limited to speed limit\}};$$

$$\text{total cursor displacement / magnitude net XY vector} = \text{scaling factor};$$

$$\text{scaling factor x tX} = \text{X displacement};$$

similarly,

$$\text{scaling factor x Y} = \text{Y displacement}.$$

FIG. 18 shows three curves. Curve A represents the linear term (LINEAR x (M-NULL) in the speed calculation quadratic equation. Curve B represents the quadratic term (SQUARE x (M-NULL)$^2$) in the speed calculation. Curve C represents the aggregate effect, i.e. it illustrates total cursor displacement as a function of M, the magnitude of the net X+Y vector, after speed factor scaling and speed limiting.

**User Control of Tracking Functions**

It is known in computer science generally to implement mapping or transfer functions by look-up tables. Look-up tables are not optimal for the present pointing system, however, because such tables require significant memory space. More importantly, look-up tables are difficult to modify as desired by a user. It is difficult to discern by examination of a table which table values are appropriate and which require adjustment. What is needed is an intuitive interface for a user to adjust cursor tracking response.

According to the present invention, run-time controls of the null, linear and squared coefficients used in calculating speed, as well as the speed factor and speed limit values, allow the user to control the system behavior in an intuitive and "user friendly" manner. For example, since the linear term coefficient dominates tracking response for low-force (slow) pointing operations, it is a simple matter to adjust low-force response by adjusting the value of the linear coefficient. This adjustment may be presented to the user not as a technical matter of adjusting the "linear tracking term coefficient," but simply as adjusting "slow pointing response".

A simple (perhaps graphical) interface can be provided for the user to select a parameter that requires adjustment, make an adjustment, and then test the result. For a selected parameter, say high-force response (quadratic coefficient) or speed limit, the user interface could, for example, display the current setting, an allowable range of settings, and perhaps a default value. The user could modify parameter values as desired. This arrangement allows "customization" of the tracking response at run time, without requiring technical know-how or modification of source code. Several different parameter settings may be stored, perhaps one for each of several users. The corresponding settings would be invoked depending upon who logged into the system.

It is also useful to store related sets of predetermined coefficient values. For example, appropriate values may be stored to allow user selection of low, medium and high "cursor responsiveness" or "acceleration".

| Coefficient Values | | | | |
|---|---|---|---|---|
| | NULL | LINEAR | SQUARE | S.F. LIMIT |
| LOW | 2.0 | 1.5 | 0.3 | 1.0500. |
| MEDIUM | 1.5 | 1.75 | 0.49 | 1.0900. |
| HIGH | 1.0 | 1.75 | 0.60 | 1.21200. |

**Operative Example of an Embodiment of the Invention**

Following is a specific example of an operative embodiment of the invention. The hardware includes the following:

| Hardware Configuration Example | |
|---|---|
| Keyboard type: | IBM PC-AT compatible |
| FSR configuration: | four elements, 4 degrees offset from cartesian keyboard coordinates |
| FSR model | custom configuration depending upon keyboard mechanics and layout. Includes four FSR elements having 30k to 4k-ohm range |
| A/D type, output range: | Charged capacitor type; maps 30k to 4k-ohms FSR resistance to 0 to 213 output counts microprocessor/microcontroller: Intel 8051 |
| Host computer | IBM - AT class compatible |

The values received from the A/D converter range from 0 to 213. This data is linearized, as described above, using the formula:

$$LFV = (RAW^2 \text{ x LINSQ}) + LINOFF$$

where LFV represents the linear force value, RAW represents the raw force value, i.e. the raw A/D count; LINSQ represents the linearization square factor, and LINOFF represents the linearization offset factor. Since LINOFF gets cancelled out in the bias step, it is set equal to 0.

During linearization, squaring the 0 to 213 range of A/D counts results in values that range from 0 to 45,369. LINSQ is set to $476/2^{18}$ or about 0.0018158. This results in linear force values (LFV) that range from 0 to 82.4. At this stage, it is necessary to keep values accurate to 2% or so.

In the biasing step, values typically are adjusted to approximately ±30. That is, a linearized bias value is typically about 40, and the linearized overall force values typically range from 10 to 70. Accordingly, the result after linearization, i.e. unbiased linear values, typically range from +30 to -30. Note that this represents an increase or decrease of force on an individual sensor from the standby bias value, respectively.

In the X+Y vector combination step, the ±30 individual sensor values tend to double, as the system is designed such that if one sensor gets an increased load, the opposite sensor will get a decreased load. The vector combination step then typically results in X and Y component values of -60 to +60 for a typical +/-30 range of individual sensor values. Note that +/-60 generally applies to only one axis at a time. In other words, when a user applies a force corresponding to +60 along one axis, it is unlikely to apply a substantial force along the orthogonal axis. During the vector combination step, it is necessary to keep values accurate to 1 or 2 percent. This is because accurate control of the angle of cursor movement is more important than accurate control of cursor speed.

The net X+Y vector magnitude computation step tends to result in values that range from 0 to +60 for X,Y components that range from -60 to +60, using the approximation technique described. This is because a large swing on one axis usually means a small swing on the other axis, resulting in a range of magnitudes approximately the same as the range of individual input values. Worst case, of course, the magnitude could be 1.5 times as much as either magnitude value. In this step, it is desirable to keep the magnitude accurate to approximately 5%. Recall that it may be off by as much as 11% if the approximation described above its used. Importantly, the approximation is continuous.

Discontinuous errors, such as those resulting from truncation of real numbers, are more likely noticed by the user. The force-to-displacement calculation proceeds as follows:

$$\text{speed} = \text{speedfactor } (\text{SQUARE}(M\text{-}NULL)^2 + \text{LINEAR}(M\text{-}NULL))$$

If speed is greater than speed limit, then set speed equal to speed limit. scale factor =speed / M, where 'M' is the computed magnitude of the XY vector (typically 0-60 range).

## Typical Coefficient Values

| Typical values for the coefficients are: | |
| --- | --- |
| speed factor | 1.0 |
| SQUARE | 0.492 |
| NULL | 1.5 |
| LINEAR | 1.75 |
| speed limit | 921.          1/8th mickeys per cursor movement (A position change). |

Therefore X+Y input magnitudes of over 42 trigger the speed limit. For a typical range of input magnitudes from 0 to 60, the speed ranges from 0 to about 22, peaking at 22 for input magnitudes of about 42.

After multiplying the original XY vector by the scale factor, typical results range from -921 to +921. The resulting total displacement vector (having components from -921 to +921) represents the number of 1/8ths of a mickey per cursor movement. In mickeys, the range is about -115 to +115 mickeys in X and Y. We have found it necessary to hold mickey movements accurate to within about 1/4th of a mickey to ensure good shallow angle tracking. Preferably, accuracy is within approximately 1/64th mickey.

At 30 cursor updates per second, this results in a maximum of 115*30 or 3450 mickeys per second. On a typical display screen, this corresponds to a maximum cursor image speed of about 56 inches per second. This cursor speed exceeds the maximum speed that user's are capable of tracking visually according to the literature. User's generally dislike speed limits initially, perceiving the system to be insufficiently responsive to their pointing actions. User's sometimes prefer to move the cursor faster than they can track it, although the resulting overshoot is not most efficient.

## Claims

1. In a computer system having a keyboard and a display screen that displays a cursor, a method of controlling cursor motion on the display screen, comprising the steps of:

   providing a force-sensitive pointing device in the keyboard, the pointing device including a plurality of force sensors each having an associated direction, for sensing external forces to the pointing device applied by a user;
   biasing the pointing device by applying a bias force to each of the force sensors so that each sensor exhibits a measurable bias value when no external force is applied by the user;
   while no external force is applied to the pointing device, reading each of the force sensors to determine the respective force sensor bias values;
   while an external force is applied to the pointing device by the user, reading the sensors to acquire raw force values from each of the force sensors;
   compensating each of the raw force values by deducting the corresponding force sensor bias value to form a corresponding unbiased force value; and then
   combining the unbiased force values according to their associated directions to form data for repositioning the cursor on the display screen.

2. A method according to claim 1 further comprising:

   periodically repeating said reading the force sensors while no external forces are applied to the pointing device so as to acquire a series of new bias values over time; and

using the series of new bias values to periodically compute a running average bias value for each one of the force sensors; and wherein said compensating step is modified by deducting the corresponding running average bias value from each of the raw force values, thereby correcting for sensor bias value drift over time.

3. A method according to claim 1 further comprising linearizing both the bias values and the raw force values to form linear force values prior to said compensating step.

4. A method according to claim 3 further comprising:

combining the unbiased, linear force values to form net X and net Y vectors;
combining the net X and net Y vectors to form a net XY vector, wherein forming the net XY vector includes approximating a magnitude of the net XY vector by summing a magnitude of a larger one of the net X and net Y vectors together with a magnitude of the smaller one of the net X and net Y vectors;
repositioning the cursor on the display screen by a distance proportional to the approximated magnitude of the net XY vector; and
periodically repeating said repositioning step thereby providing an apparent cursor speed on the display that is proportion to the approximated magnitude of the net XY vector.

5. A method according to claim 4 wherein said repositioning the cursor includes:

first computing an intermediate speed value according to a formula:

$$\text{speed} = \text{SQUARE} \times (M - \text{NULL})^2 + \text{LINEAR} \times (M - \text{NULL}),$$

where

SQUARE is a predetermined square term coefficient,
M is the approximated magnitude of the net XY vector,
NULL is a predetermined minimum force to initiate cursor motion, and LINEAR is a predetermined linear term coefficient;

scaling the intermediate speed value according to a predetermined speed factor to form a cursor speed value; and
clamping the cursor speed value so that it does not exceed a predetermined cursor speed limit, thereby determining a total cursor displacement magnitude for repositioning the cursor.

6. A method according to claim 5 further comprising:
scaling each of the net X and net Y vectors to form X and Y displacement values, respectively, so that summed together the net X and net Y vectors form a new net XY vector having a magnitude equal to the total cursor displacement magnitude; and wherein said repositioning the cursor includes updating cursor position by the X and Y displacement values.

7. A method according to claim 5 further comprising:

storing more than one set of predetermined coefficient values, each set including at least one of the SQUARE, LINEAR, NULL, speed factor and speed limit values;
providing an interface for user selection among the stored sets of coefficient values, each set being presented to the user as a single option; and
invoking the set of coefficient values thus selected by the user, whereby the user can select a desired cursor tracking responsiveness by a making a single selection without individually selecting specific coefficient values.

8. A method according to claim 7 modified in that one of the stored sets of coefficient values is selected automatically, in response to the state of a predetemined keyboard keyswitch designated as a pointing event key for emulating a mouse button, so that the cursor tracking response of the system depends upon the state of said mouse emulation button.

9. A method according to claim 5 wherein the linear term coefficient value LINEAR used for computing the intermediate speed value is selectable by the user at run-time, thereby allowing the user to adjust the cursor tracking response for slow pointing operations as desired.

10. A method according to claim 5 wherein the square term coefficient value SQUARE is selectable by the user at run-time, thereby allowing the user to adjust the cursor tracking response for fast pointing operations as desired.

11. A method according to claim 5 wherein the minimum force value NULL is selectable by the user at run-time, thereby allowing the user to adjust the cursor tracking null region as desired.

12. A method according to claim 9, 10, or 11 further comprising providing a user interface for adjusting the said coefficient, the interface including display of a current setting of the selected coefficient, display of an allowable range of settings for the selected coefficient, and means for the user to select a new value for the selected coefficient within the allowable range.

13. A method according to claim 5 wherein the speed factor used for scaling the intermediate speed value is selectable by the user at run-time, thereby allowing the user to adjust the cursor tracking responsiveness as desired.

14. A method according to claim 5 wherein the speed limit value used for clamping the intermediate speed value is selectable by the user at run-time, thereby allowing the user to adjust the cursor tracking speed limit as desired.

15. A method according to claim 13 or 14 further comprising providing a user interface for adjusting the said parameter, the interface including display of a current setting of the parameter, display of an allowable range of settings for the parameter, and means for the user to select a new value for the parameter within the allowable range.

16. A method according to claim 12 or 15 further comprising:
storing more than one set of parameter settings, each such set of parameter settings stored in association with an identification of a respective user of the system who was logged onto the system when the set of parameters was stored; and invoking the corresponding set of stored parameters in response to one of said users again logging onto the system.

## Patentansprüche

1. Verfahren für ein Computersystem mit einer Tastatur und einem Bildschirm, der einen Cursor wiedergibt, zur Steuerung der Cursorbewegung auf dem Bildschirm mit den Schritten:

Vorsehen einer kraft-sensitiven Zeigeeinrichtung in der Tastatur, wobei die Zeigeeinrichtung eine Mehrzahl von Kraftsensoren mit jeweils einer zugehörigen Richtung zum Ermitteln von durch einen Benutzer auf die Zeigeeinrichtung applizierter externer Kräfte aufweist;
Vorspannen der Zeigeeinrichtung durch Anwenden einer Vorspannungskraft auf jeden der Kraftsensoren, so daß jeder Sensor einen meßbaren Vorspannungswert zeigt, wenn keine externe Kraft durch den Benutzer angewandt wird;
Auslesen von jedem der Kraftsensoren, um die jeweiligen Kraftsensor-Vorspannungswerte festzustellen, während keine externe Kraft auf die Zeigeeinrichtung angewandt wird;
Auslesen der Sensoren um Roh-Kraftwerte von jedem der Kraftsensoren zu erhalten, während eine externe Kraft durch den Benutzer auf die Zeigeeinrichtung angewandt wird;
Kompensieren von jedem der Roh-Kraftwerte durch Berücksichtigung der korrespondierenden Kraftsensor-Vorspannungswerte, um einen korrespondierenden nicht vorgespannten Kraftwert zu bilden; und
Kombinieren der nicht vorgespannten Kraftwerte entsprechend ihrer zugehörigen Richtungen, um Daten zur Repositionierung des Cursors auf dem Bildschirm zu bilden.

2. Verfahren nach Anspruch 1,
dadurch **gekennzeichnet,**

daß weiterhin vorgesehen ist:
Periodisches Wiederholen des Auslesens der Kraftsensoren, während keine externen Kräfte auf die Zeigeeinrichtung angewandt werden, um eine Serie von neuen Vorspannungswerten über die Zeit zu erhalten; und
Verwendung der Serie von neuen Vorspannungswerten, um einen laufenden Vorspannungsdurchschnittswert für jeden der Kraftsensoren periodisch zu berechnen und wobei der Kompensationsschritt durch Abziehen der korrespondierenden laufenden Vorspannungsdurchschnittswerte von jedem der Roh-Kraftwerte modifiziert wird, wobei eine Drift des Sensor-Vorspannungswerts über die Zeit korrigiert wird.

3. Verfahren nach Anspruch 1,
dadurch **gekennzeichnet,** ,

daß weiterhin vorgesehen ist:
Linearisierung der Vorspannungswerte und der Roh-Kraftwerte, um vor dem Kompensationsschritt lineare Kraftwerte zu bilden.

4. Verfahren nach Anspruch 3,
dadurch **gekennzeichnet,**

daß weiterhin vorgesehen ist:
Kombination der nicht vorgespannten, linearen Kraftwerte, um einen bereinigten X- und einen bereinigten Y-Vektor zu bilden;
Kombination des bereinigten X- und des bereinigten Y-Vektors, um einen bereinigten XY-Vektor zu bilden, wobei die Bildung des bereinigten XY-Vektors die Approximation einer Größe des bereinigten XY-Vektors durch Summierung der Größe des grösseren von dem bereinigten X- und dem bereinigten Y-Vektor mit einer Größe des kleineren von dem bereinigten X- und dem bereinigten Y-Vektor aufweist;
Repositionierung des Cursors auf dem Bildschirm durch einen Abstand, der proportional zu der angenäherten Größe des bereinigten XY-Vektors ist; und periodisches Wiederholen des Repositionierungsschritts, wodurch eine scheinbare Cursorgeschwindigkeit auf dem Display erreicht wird, die an die angenäherte Größe des bereinigten XY-Vektors angepaßt ist.

5. Verfahren nach Anspruch 4,
dadurch **gekennzeichnet,**

daß die Repositionierung des Cursors folgende Schritte aufweist:
Erste Berechnung eines mittleren Geschwindigkeitswertes entsprechend der Formel

$$\text{Geschwindigkeit=}$$

$$\text{QUADRAT x(M-Null)}^2 \text{ +LINEAR x (M-Null)}$$

wobei,

**QUADRAT** ein festgelegter Koeffizient des quadratischen Terms ist,
**M** die angenäherte Größe des bereinigten XY-Vektors ist,
**NULL** eine bestimmte minimale Kraft zur Iniziierung der Cursorbewegung ist, und
**LINEAR** ein festgelegter Koeffizient des linearen Terms ist;
Skalierung des mittleren Geschwindigkeitswerts entsprechend eines festgelegten Geschwindigkeitsfaktors, um einen Cursorgeschwindigkeitswert zu bilden; und
Festlegung des Cursorgeschwindigkeitswerts so, daß dieser eine festgelegte Cursorgeschwindigkeitsgrenze nicht überschreitet, wodurch eine gesamte Cursorversetzungsgröße zur Repositionierung des Cursors bestimmt wird.

6. Verfahren nach Anspruch 5,
dadurch **gekennzeichnet,**

daß weiterhin vorgesehen ist:
Skalierung des bereinigten X- und des bereinigten Y-Vektors um XY-Verschiebungswerte zu bilden, so daß der bereinigte X- und der bereinigte Y-Vektor aufsummiert einen neuen bereinigten XY-Vektor bilden, dessen Größe gleich der Größe der gesamten Cursorverschiebung ist; und wobei die Repositionierung des Cursors eine Aktualisierung der Cursorposition durch die X- und Y-Verschiebungswerte beinhaltet.

**7.** Verfahren nach Anspruch 5,
dadurch **gekennzeichnet**,

daß weiterhin vorgesehen ist:
Speichern von mehr als einem Satz der festgelegten Koeffizientenwerte, wobei jeder Satz mindestens einen der Werte QUADRAT, LINEAR, NULL, Geschwindigkeitsfaktor und Geschwindigkeitsgrenze aufweist; Bereitstellung einer Schnittstelle zur Auswahl zwischen den gespeicherten Sätzen von Koeffizientenwerten durch den Benutzer, wobei dem Benutzer jeder Satz als eine einzelne Option präsentiert wird; und Aufrufen des Satzes von Koeffizientenwerten, der von dem Benutzer ausgewählt wurde, wobei der Benutzer eine gewünschte Ansprechempfindlichkeit des Cursorsteuerungssystems durch eine einzige Entscheidung ohne individuelle Auswahl spezifischer Koeffizientenwerte auswählen kann.

**8.** Verfahren nach Anspruch 7,
dadurch **gekennzeichnet,**
daß Anspruch 7 dahingehend modifiziert ist, daß einer der gespeicherten Sätze von Koeffizientenwerten automatisch als Reaktion auf den Status von einer festgelegten Tastaturtaste ausgewählt ist, die als Zeigeereignistaste zum Emulieren eines Mausknopfes bestimmt ist, so daß die Cursorsteuerungsantwort des Systems von dem Status des Maus-Emulationsknopfes abhängt.

**9.** Verfahren nach Anspruch 5,
dadurch **gekennzeichnet,**
daß der Koeffizientenwert des linearen Terms LINEAR, der zum Berechnen des mittleren Geschwindigkeitswerts benutzt wird, durch den Benutzer während der Laufzeit auswählbar ist, wodurch dem Benutzer ermöglicht wird, die Cursorsteuerungsantwort für langsame Zeigeoperationen wie gewünscht einzustellen.

**10.** Verfahren nach Anspruch 5,
dadurch **gekennzeichnet,**
daß der Koeffizientenwert des quadratischen Terms QUADRAT durch den Benutzer während der Laufzeit auswählbar ist, wodurch dem Benutzer ermöglicht wird, die Cursorsteuerungsantwort für schnelle Zeigeoperationen wie gewünscht einzustellen.

**11.** Verfahren nach Anspruch 5,
dadurch **gekennzeichnet**,
daß der minimale Kraftwert NULL von dem Benutzer während der Laufzeit ausgewählt werden kann, wodurch es dem Benutzer ermöglicht wird, die Cursorsteuerungsnullregion wie gewünscht einzustellen.

**12.** Verfahren nach einem der Ansprüche 9, 10 oder 11,
dadurch **gekennzeichnet,**

daß weiterhin vorgesehen ist:
Vorsehen einer Benutzerschnittstelle zum Einstellen der genannten Koeffizienten, wobei die Schnittstelle die Wiedergabe einer aktuellen Einstellung des selektierten Koeffizienten, die Wiedergabe eines möglichen Bereichs der Einstellung des ausgewählten Koeffizienten und eine Einrichtung für den Benutzer zum Auswählen eines neuen Wertes des selektierten Koeffizienten innerhalb des erlaubten Bereiches aufweist.

**13.** Verfahren nach Anspruch 5,
dadurch **gekennzeichnet**,
daß der Geschwindigkeitsfaktor, der zum Skalieren des Zwischen-Geschwindigkeitswerts benutzt wird, durch den Benutzer während der Laufzeit auswählbar ist, wodurch dem Benutzer ermöglicht wird, die Antwortempfindlichkeit der Cursorsteuerung wie gewünscht einzustellen.

**14.** Verfahren nach Anspruch 5,
dadurch **gekennzeichnet**,
daß der Grenzwert der Geschwindigkeit, der zum Festsetzen des Zwischengeschwindigkeitswerts benutzt wird, von dem Benutzer während der Laufzeit auswählbar ist, wodurch dem Benutzer ermöglicht wird, die Geschwindigkeitsgrenze der Cursorsteuerung wie gewünscht einzustellen.

**15.** Verfahren nach einem der Ansprüche 13 oder 14,

dadurch **gekennzeichnet,**

daß weiterhin vorgesehen ist:
Vorsehen einer Benutzerschnittstelle zum Einstellen des Parameters, wobei die Schnittstelle eine Wiedergabe einer aktuellen Einstellung des Parameters, eine Wiedergabe eines erlaubten Bereichs der Einstellungen des Parameters und eine Einrichtung für den Benutzer zum Auswählen eines neuen Werts des Parameters innerhalb des erlaubten Bereichs aufweist.

16. Verfahren nach einem der Ansprüche 12 oder 15,
dadurch **gekennzeichnet,**

daß weiterhin vorgesehen ist:
Speichern von mehr als einem der Sätze von Parametereinstellungen, wobei jeder dieser Sätze von Parametereinstellungen in Verbindung mit einer Identifikation eines jeweiligen Benutzers des Systems, der in das System eingeloggt war als der Satz von Parametern gespeichert wurde, gespeichert wird; und
Aufrufen des entsprechenden Satzes von gespeicherten Parametern in Erwiderung auf einen der Benutzer, der sich wieder in das System einloggt.

**Revendications**

1. Dans un système d'ordinateur comportant un clavier et un écran d'affichage qui affiche un curseur, un procédé de commande de déplacement du curseur sur l'écran d'affichage, comprenant les étapes consistant à :

prévoir un dispositif de pointage sensible à une force, dans le clavier, le dispositif de pointage comprenant une pluralité de capteurs de force possédant chacun une direction associée, pour détecter des forces extérieures au dispositif de pointage appliquées par un utilisateur;
solliciter le dispositif de pointage par application d'une force de sollicitation à chacun des capteurs de force de sorte que chaque capteur délivre une valeur de sollicitation mesurable lorsqu'aucune force extérieure n'est appliquée par l'utilisateur;
alors qu'aucune force extérieure n'est appliquée au dispositif de pointage, lire chacun des capteurs pour déterminer les valeurs de sollicitation respectives des capteurs de force;
alors qu'une force extérieure est appliquée au dispositif de pointage par l'utilisateur, lire les capteurs pour acquérir des valeurs de force brutes depuis chacun des capteurs de force;
compenser chacune des valeurs de force brutes par déduction de la valeur correspondante de sollicitation de capteur de force pour former une valeur de force correspondante sans sollicitation; puis
combiner les valeurs de force sans sollicitation en fonction de leurs directions associées pour former des données pour repositionner le curseur sur l'écran d'affichage.

2. Procédé selon la revendication 1, consistant en outre à :

répéter périodiquement ladite lecture des capteurs de force lorsqu'aucune force externe n'est appliquée au dispositif de pointage, pour acquérir ainsi une série de nouvelles valeurs de sollicitation dans le temps; et
utiliser la série de nouvelles valeurs de sollicitation pour calculer périodiquement une valeur courante moyenne de sollicitation pour chacun des capteurs de force; et ladite étape de compensation étant modifiée par déduction de la valeur moyenne courante correspondante de sollicitation de chacune des valeurs de force brutes, de manière à corriger la dérive dans le temps de la valeur de sollicitation des capteurs.

3. Procédé selon la revendication 1, comprenant en outre une linéarisation à la fois des valeurs de sollicitation et des valeurs de force brutes pour former des valeurs linéaires de force avant ladite étape de compensation.

4. Procédé selon la revendication 3, comprenant en outre les étapes consistant à :

combiner les valeurs linéaires de force sans sollicitation pour former des vecteurs X net et Y net;
combiner les vecteurs X net et Y net pour former un vecteur XY net, la formation du vecteur XY net incluant l'approximation d'une amplitude du vecteur XY net par addition d'une amplitude du plus grand des vecteurs X net et Y net à une amplitude du plus petit des vecteurs X net et Y net;
repositionner le curseur sur l'écran d'affichage en le déplaçant d'une distance proportionnelle à l'amplitude approximée du vecteur XY net; et
répéter périodiquement ladite étape de repositionnement de manière à obtenir ainsi une vitesse apparente du curseur sur le dispositif d'affichage, qui est proportionnelle à l'amplitude approximée du vecteur XY net.

**5.** Procédé selon la revendication 4, dans lequel ledit repositionnement du curseur comprend des opérations consistant à :

calculer tout d'abord une valeur de vitesse intermédiaire conformément à une formule :

$$\text{vitesse} = \text{SQUARE} \times (\text{M-NULL})^2 + \text{LINEAR} \times (\text{M-NULL}),$$

SQUARE étant un coefficient prédéterminé en terme carré,
M étant l'amplitude approximée du vecteur XY net,
NULL étant une force minimale prédéterminée pour déclencher le déplacement du curseur, et
LINEAR étant un coefficient de terme linéaire prédéterminé;

étalonner la valeur de vitesse intermédiaire en fonction d'un facteur de vitesse prédéterminé pour former une valeur de vitesse du curseur; et
verrouiller la valeur de vitesse du curseur de manière qu'elle ne dépasse pas une valeur prédéterminée de vitesse du curseur, pour déterminer ainsi une amplitude totale de déplacement du curseur pour repositionner le curseur.

**6.** Procédé selon la revendication 5, consistant en outre à :
étalonner chacun des vecteurs X net et Y net pour former respectivement des valeurs de déplacement X et Y de sorte que, lorsqu'ils sont additionnés, les vecteurs X net et Y net forment un nouveau vecteur XY net possédant une amplitude égale à l'amplitude totale de déplacement du curseur; et ledit repositionnement du curseur incluant la mise à jour de la position du curseur au moyen des valeurs de déplacement X et Y.

**7.** Procédé selon la revendication 5, consistant en outre à :

mémoriser plus d'un ensemble de valeurs prédéterminées de coefficients, chaque ensemble comprenant au moins une des valeurs SQUARE, LINEAR, NULL, facteur de vitesse et limite de vitesse;
prévoir une interface pour la sélection par l'utilisateur parmi les ensembles mémorisés de valeurs de coefficients, chaque ensemble étant présenté à l'utilisateur sous la forme d'une option unique; et
appeler l'ensemble de valeurs de coefficients ainsi sélectionnées par l'utilisateur, ce qui a pour effet que l'utilisateur peut sélectionner une capacité de réponse désirée de suivi du curseur moyennant l'exécution d'une simple sélection sans sélection individuelle de valeurs de coefficients spécifiques.

**8.** Procédé selon la revendication 7, modifié en ce que l'un des ensembles mémorisés de valeurs de coefficients est sélectionné automatiquement, en réponse à l'état d'un interrupteur de clavier prédéterminé désigné en tant que touche d'événement de pointage pour l'émulation d'un bouton de souris, de sorte que la réponse de suivi du curseur du système dépend de l'état dudit bouton d'émulation de la souris.

**9.** Procédé selon la revendication 5, dans lequel la valeur de coefficient de terme linéaire LINEAR utilisée pour calculer la valeur de vitesse intermédiaire peut être sélectionnée par l'utilisateur au moment de l'exécution, ce qui permet à l'utilisateur de régler la réponse de suivi du curseur pour des opérations de pointage lentes, comme il le désire.

**10.** Procédé selon la revendication 5, dans lequel la valeur de coefficient en terme carré SQUARE peut être sélectionnée par l'utilisateur au moment de l'exécution, ce qui permet à l'utilisateur de régler la réponse de suivi du curseur pour des opérations de pointage rapide comme il le désire.

**11.** Procédé selon la revendication 5, dans lequel la valeur de la force minimale NULL peut être sélectionnée par l'utilisateur au moment de l'exécution, ce qui permet à l'utilisateur de régler la zone de zéro de suivi du curseur comme il le désire.

**12.** Procédé selon l'une des revendications 9, 10 ou 11, consistant en outre à prévoir une interface d'utilisateur pour régler ledit coefficient, l'interface comprenant l'affichage d'un réglage actuel du coefficient sélectionné, l'affichage d'une gamme admissible de réglages pour le coefficient sélectionné, q et des moyens pour que l'utilisateur sélectionne une nouvelle valeur pour le coefficient sélectionné à l'intérieur de la gamme admissible.

13. Procédé selon la revendication 5, dans lequel le facteur de vitesse utilisé pour l'étalonnage de la valeur de vitesse intermédiaire peut être sélectionné par l'utilisateur au moment de l'exécution, ce qui permet à l'utilisateur de régler la capacité de réponse de suivi du curseur comme cela est souhaité.

14. Procédé selon la revendication 5, dans lequel la valeur limite de vitesse utilisée pour le verrouillage de la valeur de vitesse intermédiaire peut être sélectionnée par l'utilisateur au moment de l'exécution, ce qui permet à l'utilisateur de régler la limite de vitesse de suivi du curseur comme il le désire.

15. Procédé selon la revendication 13 ou 14, consistant en outre à prévoir une interface d'utilisateur pour régler ledit paramètre, l'interface comprenant l'affichage d'un réglage actuel du paramètre, l'affichage d'une gamme admissible de réglages pour le paramètre et des moyens pour que l'utilisateur sélectionne une nouvelle valeur pour le paramètre à l'intérieur de la gamme admissible.

16. Procédé selon la revendication 12 ou 15, comprenant les étapes consistant à : mémoriser plus d'un ensemble de réglages de paramètres, chaque ensemble de ce type de réglages de paramètres étant mémorisé en association avec une identification d'un utilisateur respectif du système qui est entré dans le système lorsque l'ensemble de paramètres a été mémorisé; et appeler l'ensemble correspondant de paramètres mémorisés en réponse à une nouvelle entrée de l'un desdits utilisateurs dans le système.

30

31

32

Microprocessor
System

34

36

42

Sensors

A/D Convert

38

40

Figure 1

Figure 2

Figure 3

Figure 4

140

Initialize — 142

Scan Keyboard — 144

Any Changes? — 146

No → Auto Repeat    Yes → Determine Key — 148

Yes

No

Enqueue Key Code — 150

Check Queue — 152

154

Figure 5

(Prior Art)

Figure 6

220

Receiving? — 222

No

Clock in Bit — 224

Complete? — 226

No

Yes

Identify? — 228

Start Pointing? — 230

Stop Pointing? — 232

Other — 234

Transmitting? — 250

No

Abort — 252

Idle — 254

Start New? — 256

Hold Off? — 260

Exit — 258

Figure 7

270

272
Receiving?

No

276
Timed Out?

274
Transmitting?

No

278
Clock Out Bit

280
Character Done?

282
Dequeue

275
Pointing Mode?

No

284
Dec. Scan timer

286
Time to scan again?

290
Dec. Bias timer

292
Time to Bias again?

288
Exit

Figure 8

Main Loop
(See Figure 6)

| Xmit Queue |
| --- |
|  |
|  |
|  |
|  |
|  |
|  |

| Xmit Char |
| --- |
| Bit Count |
| Comm Tmr |
| Rcv Char |
| Bit Count |
| Key State |
| Auto Rpt |

| Mode |
| --- |
| Scan Flag |
| Bias Flag |
| Bias Timer |
| Scan Timer |
| Bias 1 |
| Bias 2 |
| Bias 3 |
| Bias 4 |

Timer Interrupt
(See Figure 8)

Communications Interrupt
(See Figure 7)

Figure 9

Fig.10

FIG.11

FIG.12A

FIG.12B

FIG.12C

FIG.12D

FIG.12E

*FIG.13A*

*FIG.13B*

*FIG.14*

*FIG.15*

$$M \approx X + \frac{Y}{2}$$

$$X \geq Y$$

## FIG.16 A

$$M \approx Y + \frac{X}{2}$$

$$X < Y$$

## FIG.16 B

$$X_P = |X|$$

$$Y_P = |Y|$$

## FIG.17

$$X_P \geq Y_P ?$$

$$M = X_P + \frac{Y_P}{2}$$

$$M = Y_P + \frac{X_P}{2}$$

TOTAL DISPLACEMENT

C

B

A

MAGNITUDE NET X+Y

## FIG.18